(19) Europäisches Patentamt
European Patent Office
Office européen des brevets

(11) EP 4 316 850 B1

(12) EUROPEAN PATENT SPECIFICATION

(45) Date of publication and mention of the grant of the patent:
**22.04.2026 Bulletin 2026/17**

(21) Application number: **22779859.2**

(22) Date of filing: **08.03.2022**

(51) International Patent Classification (IPC):
***B41J 2/01*** *(2006.01)* ***C09D 11/322*** *(2014.01)*
***C09D 11/38*** *(2014.01)* ***C09D 11/40*** *(2014.01)*
***B41M 5/00*** *(2006.01)* ***B41J 2/21*** *(2006.01)*
***B41M 7/00*** *(2006.01)* ***C09D 11/101*** *(2014.01)*

(52) Cooperative Patent Classification (CPC):
**B41J 2/2117; B41M 7/0081; C09D 11/101; C09D 11/322; C09D 11/38; C09D 11/40**

(86) International application number:
**PCT/JP2022/010046**

(87) International publication number:
**WO 2022/209635 (06.10.2022 Gazette 2022/40)**

(54) **ELECTRON BEAM CURING INKJET INK, INK SET, AND IMAGE RECORDING METHOD**

ELEKTRONENSTRAHLHÄRTENDE TINTENSTRAHLTINTE, TINTENSATZ UND BILDAUFZEICHNUNGSVERFAHREN

ENCRE POUR JET D'ENCRE DURCISSABLE PAR FAISCEAU D'ÉLECTRONS, JEU D'ENCRES ET PROCÉDÉ D'IMPRESSION D'IMAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2021 JP 2021057393**
**18.06.2021 JP 2021101874**

(43) Date of publication of application:
**07.02.2024 Bulletin 2024/06**

(73) Proprietor: **FUJIFILM Corporation**
**Tokyo 106-8620 (JP)**

(72) Inventor: **MAKUTA, Toshiyuki**
**Ashigarakami-gun, Kanagawa 258-8577 (JP)**

(74) Representative: **Klunker IP Patentanwälte PartG mbB**
**Destouchesstraße 68**
**80796 München (DE)**

(56) References cited:
**EP-A1- 2 770 030**
**WO-A1-2016/158209**
**WO-A1-2017/056612**
**WO-A1-2017/180496**
**JP-A- 2003 301 127**
**JP-A- 2018 188 581**
**JP-A- 2020 083 980**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

## BACKGROUND OF THE INVENTION

1. Field of the Invention

The present disclosure relates to an ink jet ink for electron beam curing, an ink set, and an image recording method.

2. Description of the Related Art

In one known image recording method, an ink is applied onto a substrate, and the applied ink is cured by irradiation with actinic rays such as ultraviolet rays to obtain an image.

In recent years, using electron beams in place of ultraviolet rays as actinic rays for irradiation has been studied.

For example, JP2018-86726A discloses a cured film forming method that can provide a cured film having high adhesiveness to a substrate and a low residual monomer content, the cured film forming method including a composition application step of applying a curable composition including a polymerizable compound onto a recording medium and an irradiation step of irradiating the curable composition with two or more kinds of actinic rays, wherein at least an electron beam with an acceleration voltage of 130 kV or less is used as one of the actinic rays in the irradiation step, and the electron beam is applied so as to achieve an absorbed dose of 20 to 75 kGy in the irradiation step.

Further relevant prior art documents represent EP2770030 A1 and WO2017/180496 A1.

## SUMMARY OF THE INVENTION

An image recording method including applying an ink onto a substrate and curing the applied ink to form an image is sometimes required to provide a recorded image with high image quality (i.e., line quality) and to suppress migration in the recorded image (i.e., a phenomenon where a component included in the ink leaches out of the recorded image).

An object of an embodiment of the present invention is to provide an ink jet ink for electron beam curing, an ink set, and an image recording method according to which an image with high image quality can be recorded and migration in the recorded image can be suppressed.

The present invention is defined in appended claims.

According to an embodiment of the present invention, an ink jet ink for electron beam curing, an ink set, and an image recording method according to which an image with high image quality can be recorded and migration in the recorded image can be suppressed are provided.

## DESCRIPTION OF THE PREFERRED EMBODIMENTS

In the present disclosure, any numerical range expressed using "to" means a range including numerical values before and after "to" as lower and upper limit values.

In the present disclosure, if there are two or more substances corresponding to one component in a composition, the amount of the component in the composition means the total amount of the two or more substances present in the composition unless otherwise specified.

In numerical ranges described in stages in the present disclosure, the upper limit value or the lower limit value described in one numerical range may be replaced with the upper limit value or the lower limit value of other numerical ranges described in stages or may be replaced with values described in Examples.

In the present disclosure, the term "step" encompasses not only an independent step but also a step that is not clearly distinguished from another step if the desired object of the step is achieved.

In the present disclosure, a combination of preferred embodiments is a more preferred embodiment.

In the present disclosure, "(meth)acrylate" is a concept that encompasses both acrylate and methacrylate, "(meth)acryloyl group" is a concept that encompasses both an acryloyl group and a methacryloyl group, and "(meth)acrylic acid" is a concept that encompasses both acrylic acid and methacrylic acid.

In the present disclosure, the term "image" refers to all types of films formed using an ink, and the term "image recording" refers to the formation of an image (i.e., a film).

The concept of "image" in the present disclosure also encompasses solid images.

### Ink Jet Ink for Electron Beam Curing

An ink jet ink for electron beam curing (hereinafter also referred to simply as an "ink") of the present disclosure

contains

a polymerization initiator (A) and a polymerizable compound (B),
wherein the polymerization initiator (A) includes a hydrogen abstraction type polymerization initiator having a molecular weight of 500 or more, and
the content of the polymerization initiator (A) is more than 0 mass% and 2 mass% or less relative to the total amount of the ink.

According to the ink of the present disclosure, an image with high image quality can be recorded, and migration in the recorded image can be suppressed.
The reason why this effect is produced is probably as follows.
The ink of the present disclosure includes a hydrogen abstraction type polymerization initiator having a molecular weight of 500 or more as a polymerization initiator. This suppresses generation of low-molecular-weight components such as polymerization initiator degradants in an image, and as a result, migration (i.e., a phenomenon where a component included in the ink leaches out of the recorded image) is suppressed.
In addition, in the ink of the present disclosure, the content of the polymerization initiator (A) (i.e., the total content of polymerization initiators contained in the ink) is limited to 2 mass% or less relative to the total amount of the ink. This suppresses an increase in viscosity of the ink and suppresses a decrease in ejectability (specifically, ejectability from an ink jet head, hereinafter the same) resulting from an increase in viscosity of the ink. As a result, an image recorded using the ink has high image quality (i.e., line quality).
Because of the above-described effects (particularly, suppression of migration), the ink of the present disclosure is particularly suitable for, for example, image recording on a food packaging material. Further suppression of migration is advantageous in that the odor of an image can be reduced.
However, the use of the ink of the present disclosure is not limited to image recording on a food packaging material.
Hereinafter, components that can be contained the ink of the present disclosure will be described.

Polymerization Initiator (A)

The ink of the present disclosure contains a polymerization initiator (A).
The content of the polymerization initiator (A) is more than 0 mass% and 2 mass% or less relative to the total amount of the ink.
Here, the polymerization initiator (A) means all polymerization initiators that can be contained in the ink, and the content of the polymerization initiator (A) means the total content of all the polymerization initiators that can be contained in the ink.
When the content of the polymerization initiator (A) is more than 0 mass%, the curability of the ink upon electron beam irradiation (i.e., the polymerizability of the polymerizable compound (B)) is secured. When the ink is cured by electron beam irradiation, compared to when the ink is cured by ultraviolet irradiation, the content of the polymerization initiator (A) can be low. From the viewpoint of further improving the curability of the ink upon electron beam irradiation, the content of the polymerization initiator (A) is preferably 0.1 mass% or more, more preferably 0.3 mass%, still more preferably 0.6 mass% or more.
When the content of the polymerization initiator (A) is 2 mass% or less, migration is suppressed. From the viewpoint of further suppressing migration, the content of the polymerization initiator (A) is preferably 1.5 mass% or less.
One example of a preferred range of the content of the polymerization initiator (A) is 0.1 mass% to 2 mass%.
The polymerization initiator (A) includes a hydrogen abstraction type polymerization initiator having a molecular weight of 500 or more.
In the hydrogen abstraction type polymerization initiator having a molecular weight of 500 or more, having a molecular weight of 500 or more contributes to the effect of suppressing migration.
In the hydrogen abstraction type polymerization initiator having a molecular weight of 500 or more, being of hydrogen abstraction type contributes to the curability upon electron beam irradiation.
The preferred range of the content of the hydrogen abstraction type polymerization initiator having a molecular weight of 500 or more relative to the total amount of the ink is the same as the preferred range of the content of the polymerization initiator (A) relative to the total amount of the ink.
The polymerization initiator (A) in the ink may consist only of the hydrogen abstraction type polymerization initiator having a molecular weight of 500 or more, or may include the hydrogen abstraction type polymerization initiator having a molecular weight of 500 or more and another polymerization initiator.
Therefore, the content (mass%) of the hydrogen abstraction type polymerization initiator having a molecular weight of 500 or more relative to the total amount of the ink need not be the same as the content (mass%) of the

polymerization initiator (A) relative to the total amount of the ink.

One example of a preferred range of the content of the hydrogen abstraction type polymerization initiator having a molecular weight of 500 or more is 0.1 mass% to 2 mass%.

The proportion of the hydrogen abstraction type polymerization initiator having a molecular weight of 500 or more in the polymerization initiator (A) is preferably 50 mass% to 100 mass%, more preferably 60 mass% to 100 mass%, still more preferably 80 mass% to 100 mass%.

The proportion of the hydrogen abstraction type polymerization initiator having a molecular weight of 500 or more in the polymerization initiator (A) may be 100 mass%. That is, the polymerization initiator (A) need not include a polymerization initiator other than the hydrogen abstraction type polymerization initiator having a molecular weight of 500 or more.

The content of the polymerization initiator other than the hydrogen abstraction type polymerization initiator having a molecular weight of 500 or more is preferably 0.1 mass% or less relative to the total amount of the ink.

The molecular weight of the hydrogen abstraction type polymerization initiator having a molecular weight of 500 or more is preferably 700 or more, more preferably 800 or more, still more preferably 1000 or more.

The upper limit of the molecular weight of the hydrogen abstraction type polymerization initiator having a molecular weight of 500 or more is preferably 5000, more preferably 4000, still more preferably 3000.

The hydrogen abstraction type polymerization initiator having a molecular weight of 500 or more preferably includes a hydrogen abstraction type polymerization initiator having a molecular weight of 1000 or more.

In this case, the hydrogen abstraction type polymerization initiator having a molecular weight of 1000 or more and a hydrogen abstraction type polymerization initiator having a molecular weight of 500 or more and less than 1000 may be used in combination.

The proportion of the hydrogen abstraction type polymerization initiator having a molecular weight of 1000 or more in the hydrogen abstraction type polymerization initiator having a molecular weight of 500 or more is preferably 50 mass% to 100 mass%, more preferably 60 mass% to 100 mass%, still more preferably 80 mass% to 100 mass%.

The hydrogen abstraction type polymerization initiator having a molecular weight of 500 or more is preferably at least one of a thioxanthone compound or a benzophenone compound.

The thioxanthone compound serving as the hydrogen abstraction type polymerization initiator having a molecular weight of 500 or more is, for example, a compound represented by formula (S1) below.

The benzophenone compound serving as the hydrogen abstraction type polymerization initiator having a molecular weight of 500 or more is, for example, a compound represented by formula (S2) below.

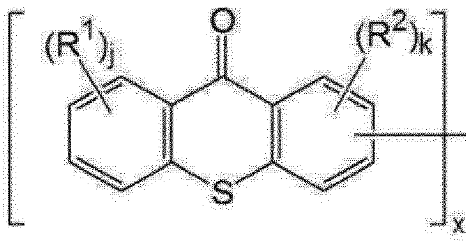

(S1)

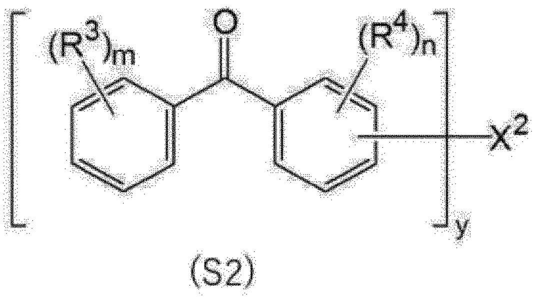

(S2)

In formula (S1) and formula (S2), $R^1$, $R^2$, $R^3$, and $R^4$ each independently represent an alkyl group having 1 to 5 carbon atoms or a halogen atom, x and y each independently represent an integer of 2 to 4, j and m each independently represent an integer of 0 to 4, k and n each independently represent an integer of 0 to 3, when j, k, m, and n are integers of 2 or greater, the pluralities of $R^1$'s, $R^2$'s, $R^3$'s, and $R^4$'s may each be the same or different, $X^1$ represents an x-valent linking group including at least one of a hydrocarbon chain, an ether bond, or an ester bond, and $X^2$ represents a y-valent linking group including at least one of a hydrocarbon chain, an ether bond, or an ester bond.

Preferred embodiments and specific examples of the compound represented by formula (S1) can be found in paragraphs 0035 to 0053 of JP2014-162828A.

The compound represented by formula (S1) may be a marketed compound. Specific examples include

Speedcure (registered trademark) 7010 (1,3-di({α-[1-chloro-9-oxo-9H-thioxanthen-4-yl]oxy}acetylpoly[oxy(1-methylethylene)]oxy)-2,2-bis({α-[1-chloro-9-oxo-9H-thioxanthen-4-yl]oxy}acetylpoly[oxy(1-methylethylene)]oxymethyl)propane, CAS No. 1003567-83-6) manufactured by Lambson;

OMNIPOL (registered trademark) TX (Polybutyleneglycol bis(9-oxo-9H-thioxanthenyloxy)acetate, CAS No. 813452-37-8) manufactured by IGM Resins B.V.; and

Genopo TX-2 manufactured by Rahn A.G.

Preferred embodiments and specific examples of the compound represented by formula (S2) can be found in paragraphs 0054 to 0075 of JP2014-162828A.

The compound represented by formula (S2) may be a marketed compound.

One specific example is OMNIPOL BP (Polybutyleneglycol bis(4-benzoylphenoxy)acetate, CAS No. 515136-48-8) manufactured by IGM Resins B.V. Polymerizable Compound (B)

The ink of the present disclosure contains a polymerizable compound (B).

Here, the polymerizable compound (B) means all polymerizable compounds that can be contained in the ink, and may comprise one polymerizable compound or two or more polymerizable compounds.

The polymerizable compound is not particularly limited as long as it is a compound including a polymerizable group.

The polymerizable group is preferably an ethylenically unsaturated group.

The ethylenically unsaturated group is preferably a (meth)acryloyl group, a vinyl group, an allyl group, or a styryl group, more preferably a (meth)acryloyl group or a vinyl group.

The molecular weight of the polymerizable compound is not particularly limited, but is preferably 5000 or less, more preferably 2000 or less, still more preferably 1500 or less, further more preferably 1000 or less.

The lower limit of the molecular weight of the polymerizable compound is, for example, 58 (the molecular weight of methyl vinyl ether).

The polymerizable compound (B) may be a monofunctional polymerizable compound (i.e., a compound including only one polymerizable group), a polyfunctional polymerizable compound (i.e., a compound including two or more polymerizable groups), or a combination of a monofunctional polymerizable compound and a polyfunctional polymerizable compound.

From the viewpoint of decreasing the viscosity of the ink and improving the ejectability, the polyfunctional polymerizable compound is preferably a bifunctional polymerizable compound (i.e., a compound including two polymerizable groups) or a trifunctional polymerizable compound (i.e., a compound including three polymerizable groups), more preferably a bifunctional polymerizable compound.

The polymerizable compound (B) preferably includes at least one of a monofunctional polymerizable compound or a bifunctional polymerizable compound, more preferably includes both a monofunctional polymerizable compound and a bifunctional polymerizable compound.

When the polymerizable compound (B) includes at least one of a monofunctional polymerizable compound or a bifunctional polymerizable compound, the total proportion of the monofunctional polymerizable compound and the bifunctional polymerizable compound in the total amount of the ink is preferably 50 mass% or more, more preferably 60 mass% or more, still more preferably 80 mass% or more.

In the ink of the present disclosure, the polymerizable compound (B) preferably includes a monofunctional polymerizable compound and a polyfunctional polymerizable compound (preferably a bifunctional polymerizable compound).

In this case, the mass content ratio of the monofunctional polymerizable compound to the polyfunctional polymerizable compound (hereinafter also referred to as the "monofunctional/polyfunctional ratio" or "monofunctional/-polyfunctional") is preferably 0.2 to 2.5, preferably 0.4 to 2.3.

When the monofunctional/polyfunctional ratio is 0.2 or more, the image quality and/or adhesiveness of an image is further improved.

When the monofunctional/polyfunctional ratio is 2.5 or less, migration is further suppressed.

Specific examples of the polymerizable compound (B) are given below, but the polymerizable compound (B) is not limited to the following specific examples. Monofunctional Polymerizable Compound

Examples of the monofunctional polymerizable compound include monofunctional (meth)acrylates, monofunctional (meth)acrylamides, monofunctional aromatic vinyl compounds, monofunctional vinyl ethers, and monofunctional N-vinyl compounds.

Examples of monofunctional (meth)acrylates include methyl (meth)acrylate, ethyl (meth)acrylate, propyl (meth) acrylate, n-butyl (meth)acrylate, hexyl (meth)acrylate, 2-ethylhexyl (meth)acrylate, tert-octyl (meth)acrylate, isoamyl (meth)acrylate, decyl (meth)acrylate, isodecyl (meth)acrylate, lauryl (meth)acrylate, stearyl (meth)acrylate, isostearyl (meth)acrylate, cyclohexyl (meth)acrylate, 4-n-butylcyclohexyl (meth)acrylate, 4-tert-butylcyclohexyl (meth)acrylate, bornyl (meth)acrylate, norbornyl (meth)acrylate, isobornyl (meth)acrylate, adamantyl (meth)acrylate, 2-ethylhexyl diglycol (meth)acrylate, butoxyethyl (meth)acrylate, 2-chloroethyl (meth)acrylate, 4-bromobutyl (meth)acrylate, cyanoethyl (meth)acrylate, benzyl (meth)acrylate, butoxymethyl (meth)acrylate, 3-methoxybutyl (meth)acrylate, 2-(2-methoxyethoxy)ethyl (meth)acrylate, 2-(2-butoxyethoxy)ethyl (meth)acrylate, ethylcarbitol (meth)acrylate, 2,2,2-tetrafluoroethyl (meth)acrylate, 1H,1H,2H,2H-perfluorodecyl (meth)acrylate, 4-butylphenyl (meth)acrylate, phenyl (meth)acrylate, 2,4,5-tetramethylphenyl (meth)acrylate, 4-chlorophenyl (meth)acrylate, 2-phenoxymethyl (meth)acrylate, 2-phenoxyethyl (meth)acrylate, glycidyl (meth)acrylate, glycidyloxybutyl (meth)acrylate, glycidyloxyethyl (meth)acrylate, glycidyloxypropyl (meth)acrylate, tetrahydrofurfuryl (meth)acrylate, 2-hydroxyethyl (meth)acrylate, 3-hydroxypropyl (meth)acrylate, 2-hydroxypropyl (meth)acrylate, 2-hydroxybutyl (meth)acrylate, 3-hydroxybutyl (meth)acrylate, 4-hydroxybutyl (meth) acrylate, cyclic trimethylolpropane formal (meth)acrylate, phenyl glycidyl ether (meth)acrylate, dimethylaminoethyl (meth)acrylate, diethylaminoethyl (meth)acrylate, dimethylaminopropyl (meth)acrylate, diethylaminopropyl (meth)acrylate, trimethoxysilylpropyl (meth)acrylate, trimethylsilylpropyl (meth)acrylate, polyethylene oxide monomethyl ether (meth)acrylate, polyethylene oxide (meth)acrylate, polyethylene oxide monoalkyl ether (meth)acrylate, dipropylene glycol (meth)acrylate, polypropylene oxide monoalkyl ether (meth)acrylate, 2-methacryloyloxyethyl succinic acid, 2-methacryloyloxyhexahydrophthalic acid, 2-methacryloyloxyethyl-2-hydroxypropyl phthalate, butoxydiethylene glycol (meth)acrylate, trifluoroethyl (meth)acrylate, perfluorooctylethyl (meth)acrylate, 2-hydroxy-3-phenoxypropyl (meth)acrylate, ethylene oxide-modified (hereinafter referred to as EO-modified) phenol (meth)acrylate, EO-modified cresol (meth) acrylate, EO-modified nonylphenol (meth)acrylate, propylene oxide-modified (hereinafter referred to as PO-modified) nonylphenol (meth)acrylate, EO-modified 2-ethylhexyl (meth)acrylate, dicyclopentenyl (meth)acrylate, dicyclopentenyloxyethyl (meth)acrylate, dicyclopentanyl (meth)acrylate, (3-ethyl-3-oxetanylmethyl) (meth)acrylate, and phenoxyethylene glycol (meth)acrylate.

Examples of monofunctional (meth)acrylamides include (meth)acrylamide, N-methyl(meth)acrylamide, N-ethyl(meth)acrylamide, N-propyl(meth)acrylamide, N-n-butyl(meth)acrylamide, N-t-butyl(meth)acrylamide, N-butoxymethyl(meth)acrylamide, N-isopropyl(meth)acrylamide, N-methylol(meth)acrylamide, N,N-dimethyl(meth)acrylamide, N,N-diethyl(meth)acrylamide, and (meth)acryloylmorpholine.

Examples of monofunctional aromatic vinyl compounds include styrene, dimethylstyrene, trimethylstyrene, isopropyl styrene, chloromethylstyrene, methoxystyrene, acetoxystyrene, chlorostyrene, dichlorostyrene, bromostyrene, vinylbenzoic acid methyl ester, 3-methylstyrene, 4-methylstyrene, 3-ethylstyrene, 4-ethylstyrene, 3-propylstyrene, 4-propylstyrene, 3-butylstyrene, 4-butylstyrene, 3-hexylstyrene, 4-hexylstyrene, 3-octylstyrene, 4-octylstyrene, 3-(2-ethylhexyl)styrene, 4-(2-ethylhexyl)styrene, allylstyrene, isopropenylstyrene, butenylstyrene, octenylstyrene, 4-t-butoxycarbonylstyrene, and 4-t-butoxystyrene.

Examples of monofunctional vinyl ethers include methyl vinyl ether, ethyl vinyl ether, propyl vinyl ether, n-butyl vinyl ether, t-butyl vinyl ether, 2-ethylhexyl vinyl ether, n-nonyl vinyl ether, lauryl vinyl ether, cyclohexyl vinyl ether, cyclohexylmethyl vinyl ether, 4-methylcyclohexylmethyl vinyl ether, benzyl vinyl ether, dicyclopentenyl vinyl ether, 2-dicyclopentenoxyethyl vinyl ether, methoxyethyl vinyl ether, ethoxyethyl vinyl ether, butoxyethyl vinyl ether, methoxyethoxyethyl vinyl ether, ethoxyethoxyethyl vinyl ether, methoxy polyethylene glycol vinyl ether, tetrahydrofurfuryl vinyl ether, 2-hydroxyethyl vinyl ether, 2-hydroxypropyl vinyl ether, 4-hydroxybutyl vinyl ether, 4-hydroxymethylcyclohexylmethyl vinyl ether, diethylene glycol monovinyl ether, polyethylene glycol vinyl ether, chloroethyl vinyl ether, chlorobutyl vinyl ether, chloroethoxyethyl vinyl ether, phenylethyl vinyl ether, and phenoxy polyethylene glycol vinyl ether.

Examples of monofunctional N-vinyl compounds include N-vinylcaprolactam, N-vinylpyrrolidone, N-vinyloxazolidinone, and N-vinyl-5-methyloxazolidinone.

The monofunctional polymerizable compound preferably includes at least one of a monofunctional (meth) acrylate or a monofunctional N-vinyl compound, more preferably includes at least one of a monofunctional (meth)acrylate including an alicyclic structure or a monofunctional N-vinyl compound.

The monofunctional (meth)acrylate including an alicyclic structure is preferably isobornyl (meth)acrylate, norbornyl (meth)acrylate, or adamantyl (meth)acrylate, more preferably isobornyl (meth)acrylate.

The total proportion of the monofunctional (meth)acrylate (preferably the monofunctional (meth)acrylate including an alicyclic structure) and the monofunctional N-vinyl compound in the monofunctional polymerizable compound is preferably 50 mass% to 100 mass%, more preferably 60 mass% to 100 mass%, still more preferably 80 mass% to 100 mass%.

The proportion of the monofunctional N-vinyl compound in the monofunctional polymerizable compound is preferably 20 mass% or more, more preferably 30 mass% or more, still more preferably 50 mass% or more.

Bifunctional Polymerizable Compound

Examples of bifunctional polymerizable compounds include bifunctional (meth)acrylates, bifunctional vinyl ethers, and bifunctional monomers including a vinyl ether group and a (meth)acryloyl group.

Examples of bifunctional (meth)acrylates include ethylene glycol di(meth)acrylate, diethylene glycol di(meth) acrylate, triethylene glycol di(meth)acrylate, propylene glycol di(meth)acrylate, dipropylene glycol di(meth)acrylate, tripropylene glycol di(meth)acrylate, polyethylene glycol di(meth)acrylate, polypropylene glycol di(meth)acrylate, butylene glycol di(meth)acrylate, tetraethylene glycol di(meth)acrylate, neopentyl glycol di(meth)acrylate, 3-methyl-1,5-pentanediol di(meth)acrylate, hexanediol di(meth)acrylate, heptanediol di(meth)acrylate, EO-modified neopentyl glycol di(meth)acrylate, PO-modified neopentyl glycol di(meth)acrylate, EO-modified hexanediol di(meth)acrylate, PO-modified hexanediol di(meth)acrylate, octanediol di(meth)acrylate, nonanediol di(meth)acrylate, decanediol di(meth)acrylate, dodecanediol di(meth)acrylate, 1,6-hexanediol di(meth)acrylate, glycerol di(meth)acrylate, pentaerythritol di(meth)acrylate, ethylene glycol diglycidyl ether di(meth)acrylate, diethylene glycol diglycidyl ether di(meth)acrylate, and tricyclodecane dimethanol di(meth)acrylate.

Examples of bifunctional vinyl ethers include 1,4-butanediol divinyl ether, ethylene glycol divinyl ether, diethylene glycol divinyl ether, triethylene glycol divinyl ether, polyethylene glycol divinyl ether, propylene glycol divinyl ether, butylene glycol divinyl ether, hexanediol divinyl ether, 1,4-cyclohexanedimethanol divinyl ether, bisphenol A alkylene oxide divinyl ethers, and bisphenol F alkylene oxide divinyl ethers.

Examples of bifunctional polymerizable compounds including a vinyl ether group and a (meth)acryloyl group include 2-(2-vinyloxyethoxy)ethyl (meth)acrylate.

Tri- or Higher Functional Polymerizable Compound

Examples of tri- or higher functional polymerizable compounds include tri- or higher functional (meth)acrylates and tri- or higher functional vinyl ethers.

Examples of tri- or higher functional (meth)acrylates include trimethylolethane tri(meth)acrylate, trimethylolpropane tri(meth)acrylate, EO-modified trimethylolpropane tri(meth)acrylate, PO-modified trimethylolpropane tri(meth)acrylate, pentaerythritol tri(meth)acrylate, pentaerythritol tetra(meth)acrylate, dipentaerythritol tetra(meth)acrylate, dipentaerythritol penta(meth)acrylate, dipentaerythritol hexa(meth)acrylate, tri(meth)acryloyloxyethoxytrimethylolpropane, glycerol polyglycidyl ether poly(meth)acrylate, and tris(2-acryloyloxyethyl) isocyanurate.

Examples of tri- or higher functional vinyl ethers include trimethylolethane trivinyl ether, trimethylolpropane trivinyl ether, ditrimethylolpropane tetravinyl ether, glycerol trivinyl ether, pentaerythritol tetravinyl ether, dipentaerythritol pentavinyl ether, dipentaerythritol hexavinyl ether, EO-modified trimethylolpropane trivinyl ether, PO-modified trimethylolpropane trivinyl ether, EO-modified ditrimethylolpropane tetravinyl ether, PO-modified ditrimethylolpropane tetravinyl ether, EO-modified pentaerythritol tetravinyl ether, PO-modified pentaerythritol tetravinyl ether, EO-modified dipentaerythritol hexavinyl ether, and PO-modified dipentaerythritol hexavinyl ether.

Urethane (Meth)Acrylate

Examples of the above-described bifunctional polymerizable compounds and tri- or higher functional polymerizable compounds also include urethane (meth)acrylates.

Examples of urethane (meth)acrylates include a urethane (meth)acrylate that is a reaction product of a bifunctional isocyanate compound and a hydroxy group-containing (meth)acrylate.

Examples of the bifunctional isocyanate compound include

aliphatic diisocyanates such as methylene diisocyanate, dimethylene diisocyanate, trimethylene diisocyanate, tetramethylene diisocyanate, pentamethylene diisocyanate, hexamethylene diisocyanate, dipropyl ether diisocyanate, 2,2-dimethylpentane diisocyanate, 3-methoxyhexane diisocyanate, octamethylene diisocyanate, 2,2,4-trimethylpentane diisocyanate, nonamethylene diisocyanate, decamethylene diisocyanate, 3-butoxyhexane diisocyanate, 1,4-butylene glycol dipropyl ether diisocyanate, and thiodihexyl diisocyanate;

aromatic diisocyanates such as m-phenylene diisocyanate, p-phenylene diisocyanate, 2,4-tolylene diisocyanate, 2,6-tolylene diisocyanate, dimethylbenzene diisocyanate, ethylbenzene diisocyanate, isopropylbenzene diisocyanate, tolidine diisocyanate, 1,4-naphthalene diisocyanate, 1,5-naphthalene diisocyanate, 2,6-naphthalene diisocyanate, 2,7-naphthalene diisocyanate, metaxylylene diisocyanate, paraxylylene diisocyanate, and tetramethylxylylene diisocyanate; and

alicyclic diisocyanates such as hydrogenated xylylene diisocyanate, isophorone diisocyanate, and dicyclohexylmethane 4,4'-diisocyanate.

Examples of the hydroxy group-containing (meth)acrylate include 2-hydroxyethyl (meth)acrylate, 3-hydroxypropyl (meth)acrylate, 2-hydroxypropyl (meth)acrylate, 2-hydroxybutyl (meth)acrylate, 3-hydroxybutyl (meth)acrylate, 4-hydroxybutyl (meth)acrylate, phenyl glycidyl ether (meth)acrylate, pentaerythritol (meth)triacrylate, and dipentaerythritol penta(meth)acrylate.

Epoxy (Meth)Acrylate

Examples of the above-described bifunctional polymerizable compounds and tri- or higher functional polymerizable compounds also include epoxy (meth)acrylates.

Here, the term "epoxy (meth)acrylate" refers to a reaction product obtained by the reaction between a carboxy group in (meth)acrylic acid and two or three epoxy groups in an epoxy compound including two or three epoxy groups.

Therefore, the structure of an epoxy (meth)acrylate does not include an epoxy group. In this respect, epoxy (meth)acrylates are different from epoxy compounds that are examples of the cationically polymerizable monomer

described above.

Examples of epoxy (meth)acrylates include reaction products of (meth)acrylic acid and epoxy resins.

Examples of epoxy resins include bisphenol A epoxy resins and cresol novolac epoxy resins.

Pigment (C)

The ink of the present disclosure may contain a pigment (C). That is, the ink of the present disclosure may be a clear ink not containing the pigment (C).

Here, the pigment (C) means all pigments that can be contained in the ink, and may comprise one pigment or two or more pigments.

The pigment can be incorporated in the ink in the form of a pigment dispersion liquid.

The pigment dispersion liquid, which is a liquid obtained by dispersing a pigment in a liquid medium using a dispersing agent, includes at least a pigment, a dispersing agent, and a liquid medium.

When a self-dispersible pigment is used as the pigment, the dispersing agent need not be incorporated in the ink.

The liquid medium is, for example, an organic solvent.

The liquid medium may be any of the above-described polymerizable compounds incorporated in the ink.

The pigment may be any of commercially available organic pigments and inorganic pigments.

The pigment may be an invisible pigment having infrared absorptivity.

The content of the pigment (C) (i.e., the total content of the pigments contained in the ink) is preferably 1 mass% to 20 mass%, more preferably 2 mass% to 10 mass%, relative to the total amount of the ink.

Dispersing Agent

The ink of the present disclosure may contain at least one dispersing agent for dispersing the pigment (C).

The dispersing agent may be a commonly known dispersing agent. From the viewpoint of dispersion stability, the dispersing agent is preferably a compound having both a hydrophilic structure and a hydrophobic structure.

Examples of the dispersing agent include low-molecular-weight dispersing agents having a molecular weight of less than 1000, such as higher fatty acid salts, alkyl sulfates, alkyl ester sulfates, alkyl sulfonates, sulfosuccinates, naphthalene sulfonates, alkyl phosphates, polyoxyalkylene alkyl ether phosphates, polyoxyalkylene alkylphenyl ethers, polyoxyethylene polyoxypropylene glycols, glycerol fatty acid esters, sorbitan fatty acid esters, polyoxyethylene fatty acid amides, and amine oxides.

Other examples of the dispersing agent include high-molecular-weight dispersing agents having a molecular weight of 1000 or more that are obtained by copolymerizing a hydrophilic monomer and a hydrophobic monomer. From the viewpoint of dispersion stability, the hydrophilic monomer is preferably a dissociable group-containing monomer, more preferably a dissociable group-containing monomer having a dissociable group and an ethylenically unsaturated bond. Examples of the dissociable group-containing monomer include carboxy group-containing monomers, sulfonic acid group-containing monomers, and phosphoric acid group-containing monomers. From the viewpoint of dispersion stability, the hydrophobic monomer is preferably an aromatic group-containing monomer having an aromatic group and an ethylenically unsaturated bond, or an aliphatic hydrocarbon group-containing monomer having an aliphatic hydrocarbon group and an ethylenically unsaturated bond. The polymer may be a random copolymer or a block copolymer.

The dispersing agent may be a commercially available product. Examples of the commercially available product include

DISPERBYK-101, DISPERBYK-102, DISPERBYK-103, DISPERBYK-106, DISPERBYK-110, DISPERBYK-111, DISPERBYK-161, DISPERBYK-162, DISPERBYK-163, DISPERBYK-164, DISPERBYK-166, DISPERBYK-167, DISPERBYK-168, DISPERBYK-170, DISPERBYK-171, DISPERBYK-174, DISPERBYK-182 (manufactured by BYK Chemie GmbH); and

SOLSPERSE 3000, SOLSPERSE 5000, SOLSPERSE 9000, SOLSPERSE 12000, SOLSPERSE 13240, SOLSPERSE 13940, SOLSPERSE 17000, SOLSPERSE 22000, SOLSPERSE 24000, SOLSPERSE 26000, SOLSPERSE 28000, SOLSPERSE 32000, SOLSPERSE 36000, SOLSPERSE 39000, SOLSPERSE 41000, SOLSPERSE 71000 (manufactured by Lubrizol Corporation).

The dispersing device for dispersing the pigment may be a known dispersing device, and examples thereof include ball mills, sand mills, bead mills, roll mills, jet mills, paint shakers, attritors, ultrasonic dispersing machines, and disper mixers.

In the ink, the ratio of the content of the dispersing agent to the content of the pigment (i.e., dispersing agent content/pigment content) on a mass basis is preferably 0.05 to 1.0, more preferably 0.1 to 0.8, from the viewpoint of dispersion stability.

Amine Having Molecular Weight of 500 or More

The ink of the present disclosure further contains an amine having a molecular weight of 500 or more, wherein a content of the amine having a molecular weight of 500 or more is 0.1 mass% to 2 mass% relative to the total amount of the ink jet ink for electron beam curing.
This further improves the image quality and further suppresses migration.
When the content of the amine having a molecular weight of 500 or more is 2 mass% or less, migration is further suppressed. From the viewpoint of further suppressing migration, the content of the amine having a molecular weight of 500 or more is preferably 1.5 mass% or less.
The amine having a molecular weight of 500 or more is not particularly limited as long as it is a compound including an amino group (i.e., including at least one of an unsubstituted amino group or a substituted amino group) and having a molecular weight of 500 or more.
The amine having a molecular weight of 500 or more is, for example, a compound represented by formula (X) below.

$NR^1R^2R^3$ formula (X)

[In formula (X), $R^1$, $R^2$, and $R^3$ each independently represents a hydrogen atom or a substituent, provided that $R^1$, $R^2$, and $R^3$ are selected such that the compound represented by formula (X) has a molecular weight of 500 or more. ]
In formula (X), preferably, two or more of $R^1$, $R^2$, and $R^3$ are substituents, and more preferably, all three of $R^1$, $R^2$, and $R^3$ are substituents.
It is also preferred that $R^1$, $R^2$ and $R^3$ include a (meth)acryloyloxy group.
The amine having a molecular weight of 500 or more includes at least one amino group, and from the viewpoint of viscosity and suppression of migration, the amine having a molecular weight of 500 or more preferably includes 1 to 6 amino groups, more preferably includes 1 to 3 amino groups, still more preferably includes 1 or 2 amino groups.
When the amine having a molecular weight of 500 or more includes a (meth)acryloyloxy group, from the viewpoint of reactivity and viscosity, the amine having a molecular weight of 500 or more preferably includes 1 to 6 (meth)acryloyl groups, more preferably includes 1 to 4 (meth)acryloyl groups, still more preferably includes 1 or 2 (meth)acryloyl groups.
The amine having a molecular weight of 500 or more may be a commercially available product.
Examples of commercially available amines having a molecular weight of 500 or more include:

GENOMER 5161, GENOMER 5271, GENOMER 5275, and GENOMER 5795 (all from RAHN AG);
CN371, CN373, CN383, CN384, CN386, CN501, CN550, and CN551 (all from SARTOMER);
EBECRYL 7100, EBECRYL 80, EBECRYL 81, EBECRYL 83, EBECRYL 84, and EBECRYL P115 (all from Daicel-Cytec Ltd.);
Laromer PO77F (LR8946), Laromer LR8956, Laromer LR8996, and Laromer PO94F (LR8894) (all from BASF);
Photomer 4771, Photomer 4775, Photomer 4967, Photomer 5006, Photomer 5096, Photomer 5662, and Photomer 5930 (all from Cognis);
Doublecure EPD, Doublecure OPD, Doublecure 115, Doublecure 225, Doublecure 645, PolyQ222, PolyQ226, PolyQ224, and PolyQ101 (all from Double Bond Chemical Ind., Co., Ltd.); and
Omnipol ASA (from IGM Resins).

Amines having a molecular weight of 500 or more can be found in, for example, paragraphs 0072 to 0074 of JP2011-68783A and paragraphs 0069 to 0070 of JP2015-160890A.
From the viewpoint of further suppressing migration, the molecular weight of the amine having a molecular weight of 500 or more is preferably 700 or more, more preferably 800 or more, still more preferably 1000 or more.
The upper limit of the molecular weight of the amine having a molecular weight of 500 or more is preferably 10000, more preferably 7000, still more preferably 5000.
The amine having a molecular weight of 500 or more preferably includes an amine having a molecular weight of 1000 or more.
In this case, the amine having a molecular weight of 1000 or more and an amine having a molecular weight of 500 or more and less than 1000 may be used in combination.
The proportion of the amine having a molecular weight of 1000 or more in the amine having a molecular weight of 500 or more is preferably 50 mass% to 100 mass%, more preferably 60 mass% to 100 mass%, still more preferably 80 mass% to 100 mass%. Silicone-Based Surfactant
The ink of the present disclosure preferably further contains at least one silicone-based surfactant. This further improves the image quality of an image and further suppresses migration.
Here, the silicone-based surfactant is a surfactant including a siloxane structure. Examples of the silicone-based

surfactant include BYK-UV3500, 3505, 3510, 3530, 3570, 3575, 3576, 3760, 378, 375, 306, 333, 377, 330, 307, 342, 302, 300, 331, 325, 320, 315N, 326, 322 (all manufactured by BYK); TEGO Rad 2100, 2200, 2250, 2300, 2500, 2600, 2700, 2010; TEGO Glide 100, 110, 130, 406, 410, 411, 415, 420, 432, 435, 440, 450, 482, A115, B1484, ZG400; and TEGO Flow 300, 370, 425, ATF2, ZFS 460 (all manufactured by Evonik Industries).

The content of the silicone-based surfactant is preferably 0.1 mass% or more, more preferably 0.3 mass% or more, still more preferably 1 mass% or more, relative to the total amount of the ink.

The upper limit of the content of the silicone-based surfactant is preferably 10 mass%, more preferably 5 mass%, relative to the total amount of the ink.

Other Surfactant

The ink of the present disclosure may further contain at least one surfactant other than the silicone-based surfactant.

The type of the other surfactant is not particularly limited. The surfactant may be an anionic surfactant, a cationic surfactant, or a nonionic surfactant.

The other surfactant may be, for example, an acrylic surfactant or a fluorosurfactant.

The acrylic surfactant is a surfactant including a structure derived from an acrylic monomer. Examples of the acrylic surfactant include BYK361N, BYK350, BYK356, and BYK-UV3535 (all manufactured by BYK).

The fluorosurfactant is a surfactant including a perfluoroalkyl group. Examples of the fluorosurfactant include Megaface F-114, F-251, F-253, F-281, F-410, F-477, F-510, F-551, F-552, F-553, F-554, F-555, F-556, F-557, F-558, F-559, F-560, F-561, F-562, F-563, F-565, F-568, F-569, F-570, F-572, F-574, F-575, F-576, R-40, R-40-LM, R-41, R-94, RS-56, RS-72-K, RS-75, RS-76-E, RS-76-NS, RS-78, RS-90, and DS-21 (all manufactured by DIC Corporation). Other Components

The ink of the present disclosure may optionally contain other components other than the components described above. Examples of the other components include sensitizers, co-sensitizers, polymerization inhibitors, ultraviolet absorbers, antioxidants, anti-fading agents, electroconductive salts, organic solvents, and basic compounds.

Physical Properties

For higher ejectability in application using an ink jet method, the pH of the ink is preferably 7 to 10, more preferably 7.5 to 9.5. The pH is measured at 25°C using a pH meter, such as a pH meter (model number "HM-31") manufactured by DKK-TOA Corporation.

The viscosity of the ink is preferably 0.5 mPa·s to 30 mPa·s, more preferably 2 mPa·s to 20 mPa·s, preferably 2 mPa·s to 15 mPa·s, still more preferably 3 mPa·s to 10 mPa·s. The viscosity is measured at 25°C using a viscometer, such as a TV-22 type viscometer manufactured by Toki Sangyo Co., Ltd.

The surface tension of the ink is preferably 60 mN/m or less, more preferably 20 mN/m to 50 mN/m, still more preferably 25 mN/m to 45 mN/m. The surface tension is measured at 25°C using a surface tensiometer. For example, the surface tension is measured by a plate method using an automatic surface tensiometer (product name "CBVP-Z") manufactured by Kyowa Interface Science Co., Ltd.

Ink Set

First Embodiment

An ink set according to a first embodiment of the present disclosure is preferably an ink set including two or more inks, each being the ink of the present disclosure described above.

The ink set according to the first embodiment of the present disclosure includes the ink of the present disclosure and thus produces the same effects as the effects of the ink of the present disclosure (i.e., an image with high image quality can be recorded and migration in the recorded image can be suppressed).

Examples of the ink set including two or more inks, each being the ink of the present disclosure, include a combination of an ink of the present disclosure not including the pigment (C) and one or more inks of the present disclosure including the pigment (C); and a combination of two or more inks of the present disclosure including the pigment (C).

In particular, according to an ink set of the present disclosure containing two or more inks of the present disclosure including the pigment (C), the two or more inks enables recording of a multicolored image with high image quality and less likely to undergo migration.

In the ink set of the present disclosure containing two or more inks of the present disclosure including the pigment (C), preferably, the two or more inks of the present disclosure are different in hue of the pigment (C).

That is, in the ink set of the present disclosure, preferably, the two or more inks of the present disclosure are

different in hue.

The two or more inks included in the ink set of the present disclosure preferably include two or more selected from the group consisting of

white inks (e.g., a white ink including a white pigment as the pigment (C)),
black inks (e.g., a black ink including a black pigment as the pigment (C) and a composite black ink including a combination of a cyan pigment, a magenta pigment, and a yellow pigment as the pigment (C)),
cyan inks (e.g., a cyan ink including a cyan pigment as the pigment (C)),
magenta inks (e.g., a magenta ink including a magenta pigment as the pigment (C)), and
yellow inks (e.g., a yellow ink including a yellow pigment as the pigment (C)).

The ink set in this case may optionally further include an ink of another color.

From the viewpoint of image quality (i.e., line quality) improvement and color bleeding suppression of a multicolored image to be recorded, each of the two or more inks in the ink set of the present disclosure preferably contains a silicone-based surfactant.

In this case, a preferred range of the content of the silicone-based surfactant relative to the total amount of the inks is as described above (e.g., 1 mass% to 5 mass% relative to the total amount of the inks).

The ink set of the present disclosure may include at least one liquid other than the two or more inks of the present disclosure.

Examples of the other liquid include inks other than the inks of the present disclosure, undercoat liquids, overcoat liquids, and maintenance liquids.

Second Embodiment

An ink set according to a second embodiment of the present disclosure includes the ink of the present disclosure described above and a color ink containing a pigment, and preferably, the color ink includes no polymerization initiators or includes a polymerization initiator in an amount of 0.1 mass% or less relative to the total amount of the color ink.

The ink set of the present disclosure includes a white ink that is the ink of the present disclosure described above containing a white pigment as the pigment (C) and a color ink containing a pigment having a hue other than white, and preferably, the color ink includes no polymerization initiators or includes a polymerization initiator in an amount of 0.1 mass% or less relative to the total amount of the color ink.

The ink set according to the second embodiment of the present disclosure includes the ink of the present disclosure and thus produces the same effects as the effects of the ink of the present disclosure (i.e., an image with high image quality can be recorded and migration in the recorded image can be suppressed).

The color ink preferably includes a pigment having a hue other than white. Examples of the pigment having a hue other than white include black pigments, cyan pigments, magenta pigments, and yellow pigments.

The color ink included in the ink set of the present disclosure may be of one type or two or more types.

The color ink preferably includes a polymerizable compound in addition to the pigment. Preferred embodiments of the polymerizable compound included in the color ink are the same as the preferred embodiments of the polymerizable compound (B) included in the ink of the present disclosure.

The color ink preferably further includes a silicone-based surfactant. Preferred embodiments of the silicone-based surfactant included in the color ink are the same as the preferred embodiments of the silicone-based surfactant included in the ink of the present disclosure.

The color ink preferably contains no polymerization initiators or contains a polymerization initiator in an amount of 0.1 mass% or less relative to the total amount of the color ink.

The color ink may optionally contain other components other than the components described above. Examples of the other components include sensitizers, co-sensitizers, polymerization inhibitors, ultraviolet absorbers, antioxidants, anti-fading agents, electroconductive salts, organic solvents, and basic compounds.

Image Recording Method

An image recording method of the present disclosure is an image recording method using the ink of the present disclosure described above, and includes

an ink application step of applying the ink of the present disclosure onto a substrate, and
an electron beam irradiation step of irradiating the ink applied onto the substrate with an electron beam.

The image recording method of the present disclosure uses the ink of the present disclosure and thus produces

the same effects as the effects of the ink of the present disclosure (i.e., an image with high image quality can be recorded and migration in the recorded image can be suppressed).

Ink Application Step

In the ink application step, the ink is applied onto a substrate by an ink jet method.

The type of the substrate is not particularly limited, and examples thereof include paper, paper laminated with plastics (e.g., polyethylene, polypropylene, and polystyrene), metal plates (e.g., plates of metals such as aluminum, zinc, and copper), plastic films (e.g., films of polyvinyl chloride (PVC) resin, cellulose diacetate, cellulose triacetate, cellulose propionate, cellulose butyrate, cellulose acetate butyrate, cellulose nitrate, polyethylene terephthalate (PET), polyethylene (PE), polystyrene (PS), polypropylene (PP), polycarbonate (PC), polyvinyl acetal, and acrylic resin), paper laminated or deposited with the foregoing metals, and plastic films laminated or deposited with the foregoing metals.

The system of applying the ink by the ink jet method (hereinafter also referred to as the ink jet recording system) may be any known system as long as an image can be recorded. Examples of the ink jet recording system include a charge control system in which an ink is ejected using electrostatic attraction, a drop-on-demand system (pressure pulse system) in which vibration pressure of a piezoelectric element is used, an acoustic ink jet system in which an ink is irradiated with an acoustic beam converted from an electric signal and the ink is ejected using radiation pressure, and a thermal ink jet (Bubble Jet (registered trademark)) system in which an ink is heated to form bubbles and the pressure generated is used.

Examples of ink jet heads used in the ink jet recording system include a short serial head and a line head. The short serial head is used in a shuttle system in which recording is performed while a substrate is scanned across its width with the head, and the line head, in which recording elements are arranged so as to correspond to the entire one side of a substrate, is used in a line system.

In the line system, a pattern can be formed on the entire surface of a substrate by scanning the substrate in a direction orthogonal to the direction in which recording elements are arranged, and any transport system for moving the short head, such as a carriage, is not necessary. Furthermore, in the line system, complicated scanning control of carriage movement and a substrate is not necessary and only the substrate moves, so that a higher recording speed than in the shuttle system can be achieved.

The volume of droplets of the ink ejected from an ink jet head is preferably 1 pL (picoliter) to 100 pL, more preferably 3 pL to 80 pL, still more preferably 3 pL to 50 pL.

The ink application step preferably includes

applying the ink of the present disclosure onto a substrate, and
irradiating the ink applied onto the substrate with an ultraviolet radiation X including a radiation with a wavelength of 300 nm to 395 nm.

In the electron beam irradiation step in this case, it is preferable to irradiate the ink irradiated with the ultraviolet radiation X with an electron beam.

The ink of the present disclosure, due to a relatively low polymerization initiator (A) content, is not completely cured upon the irradiation with the ultraviolet radiation X, but is thickened. As a result of this, the effect of pinning exposure is produced.

For example, when two or more inks are applied in layers, the ink applied onto the lower layer side is irradiated with the ultraviolet radiation X before the ink on the upper layer side is applied. This suppresses bleeding between the ink on the upper layer side and the ink on the lower layer side. Thereafter, in the electron beam irradiation step, final curing is performed by irradiating the ink irradiated with the ultraviolet radiation X with an electron beam to obtain a multicolor image with high image quality (i.e., line quality).

The ultraviolet radiation X includes a radiation with a wavelength of 300 nm to 395 nm.

The UV light source used for the irradiation with the ultraviolet radiation X may be a known UV light source in which at least one of irradiance or irradiation time is variable.

The UV light source is preferably a light emitting diode (LED) light source.

The irradiance of the ultraviolet radiation X is preferably 0.10 $W/cm^2$ to 0.50 $W/cm^2$, more preferably 0.20 $W/cm^2$ to 0.50 $W/cm^2$, still more preferably 0.25 $W/cm^2$ to 0.45 $W/cm^2$.

The irradiation energy of the ultraviolet radiation X is preferably 2 $mJ/cm^2$ to 20 $mJ/cm^2$, more preferably 4 $mJ/cm^2$ to 15 $mJ/cm^2$.

Electron Beam Irradiation Step

In the electron beam irradiation step, the ink applied onto the substrate in the ink application step is irradiated with an electron beam.

In the electron beam irradiation step, the ink is irradiated with an electron beam to polymerize the polymerizable compounds in the ink and cure the ink, thereby obtaining an image.

The irradiation with an electron beam can be performed using electron beam irradiation equipment.

The conditions of the irradiation with an electron beam are not particularly limited.

The acceleration voltage in the irradiation with an electron beam is, for example, 50 kV to 200 kV, preferably 50 kV to 110 kV.

The dose of the irradiation with an electron beam is, for example, 10 kGy to 100 kGy, preferably 30 kGy to 90 kGy.

The processing speed in the irradiation with an electron beam is, for example, 1 m/min to 200 m/min.

The irradiation with an electron beam may be carried out in an environment in which the oxygen concentration is 20 vol% or less (more preferably less than 20 vol%, still more preferably 5 vol% or less). With this environment, polymerization inhibition due to oxygen is suppressed, and migration is further suppressed.

The environment with an oxygen concentration of less than 20 vol% is preferably an environment in which an inert gas (e.g., nitrogen gas, argon gas, or helium gas) is present.

The image recording method of the present disclosure may optionally include other steps other than the steps described above.

A recording method A, which is a preferred embodiment of the image recording method of the present disclosure, will be described.

Recording Method A

The recording method A is an image recording method using the ink set according to the first embodiment of the present disclosure described above.

The recording method A includes

an ink application step of sequentially applying the two or more inks in the ink set onto a substrate, and
an electron beam irradiation step of irradiating the two or more inks applied onto the substrate with an electron beam.

According to the recording method A, the effect of the image recording method of the present disclosure can be produced, and a multicolored image can be recorded using the two or more inks.

In the ink application step of the recording method A, during the process of sequentially applying the two or more inks onto a substrate, at least one of the two or more inks applied onto the substrate is preferably irradiated with the ultraviolet radiation X.

In this embodiment, the effect of pinning exposure is produced through the irradiation with the ultraviolet radiation X, so that ink bleeding particularly in the case where the two or more inks are applied in layers can be suppressed, and as a result, an image with high image quality (i.e., line quality) can be obtained.

In the ink application step of the recording method A, more preferably, an operation of applying one of the two or more inks onto a substrate and irradiating the applied one with the ultraviolet radiation X is sequentially performed on the two or more inks one by one.

In this embodiment, the effect of pinning exposure is more effectively produced through the irradiation with the ultraviolet radiation X, so that ink bleeding particularly in the case where the two or more inks are applied in layers can be more effectively suppressed, and as a result, an image having higher image quality (i.e., line quality) can be obtained.

Hereinafter, an example of the above-described case where "an operation of applying one of the two or more inks onto a substrate and irradiating the applied one with the ultraviolet radiation X is sequentially performed on the two or more inks one by one" will be described.

In the ink application step according to this example, an ink set including a white ink, a black ink, a cyan ink, a magenta ink, and a yellow ink is used, and these inks are applied in this order onto a substrate.

In the ink application step according to this example,

application of the white ink,
irradiation of the applied white ink with the ultraviolet radiation X,
application of the black ink,
irradiation of the applied black ink with the ultraviolet radiation X,
application of the cyan ink,
irradiation of the applied cyan ink with the ultraviolet radiation X,
application of the magenta ink,
irradiation of the applied magenta ink with the ultraviolet radiation X,
application of the yellow ink, and
irradiation of the applied yellow ink with the ultraviolet radiation X

are performed in this order.

According to this example, ink bleeding in the case where two or more of these inks are applied in layers can be more effectively suppressed, and as a result, an image having higher image quality (i.e., line quality) can be obtained.

In the recording method A, preferably,

the ink set includes
a white ink that is an ink containing a white pigment as the pigment (C), and
a color ink that is an ink containing a pigment having a hue other than white as the pigment (C), and
in the ink application step, the white ink and the color ink are applied in this order, and a value obtained by subtracting a dynamic surface tension γ of the color ink at 500 μs after application of the color ink from a dynamic surface tension γ of the white ink at 500 μs after application of the white ink (hereinafter also referred to as a "dynamic surface tension difference [white ink - color ink]") is more than 1 mN/m.

In this embodiment, insufficient spread of dots of the color ink applied onto the white ink is suppressed, and as a result, the image quality (i.e., line quality) is improved.

The color ink in this embodiment may be of one type or two or more types.

The above effect is effectively produced particularly when the white ink and the color ink each contain a silicone-based surfactant in an amount of 1 mass% to 5 mass% relative to the total amount of the ink.

In the present disclosure, a dynamic surface tension at 500 μs (microseconds) after application of an ink means a value determined by a maximum bubble pressure method in an environment of 23°C and 55% RH.

The dynamic surface tension at 500 μs after application of an ink is measured using, for example, a BP100 maximum bubble pressure dynamic surface tensiometer (manufactured by KRUSS GmbH).

In the recording method A, preferably,

the ink set includes
a white ink that is an ink containing a white pigment as the pigment (C), and
two or more color inks that are each an ink containing a pigment having a hue other than white as the pigment (C),
in the ink application step, the white ink is applied, and then the two or more color inks are sequentially applied, and
when n is an integer of 2 or greater, an absolute value of a value obtained by subtracting a dynamic surface tension γ (n + 1) of the color ink applied (n + 1)-th at 500 μs after application of the color ink applied (n + 1)-th from a dynamic surface tension γ (n) of the color ink applied n-th at 500 μs after application of the color ink applied n-th is 1 mN/m or less.

In this embodiment, both insufficient spread and excessive spread of dots of the (n + 1)-th color ink applied onto the n-th color ink are suppressed, and as a result, the image quality (i.e., line quality) is improved and color bleeding is suppressed. Furthermore, as a result of suppression of both insufficient spread and excessive spread of dots of the (n + 1)-th color ink, for example, deformation of an image depicting a shape such as a quadrangle is also suppressed.

The above effect is effectively produced particularly when the white ink and the color ink each contain a silicone-based surfactant in an amount of 1 mass% to 5 mass% relative to the total amount of the ink.

A recording method B, which is a preferred embodiment of the image recording method of the present disclosure, will be described.

Recording Method B

The recording method B is an image recording method using the ink set according to the second embodiment of the present disclosure described above.

The recording method B preferably includes

an ink application step of applying, onto a substrate, the ink of the present disclosure described above and the color ink in the ink set in this order, and
an electron beam irradiation step of irradiating the ink of the present disclosure and the color ink applied onto the substrate with an electron beam.

In particular, the recording method B preferably includes

an ink application step of applying, onto a substrate, the white ink (the ink of the present disclosure containing a white pigment as the pigment (C)) and the color ink containing a pigment having a hue other than white in the ink set in this order, and
an electron beam irradiation step of performing electron beam irradiation after application of the white ink onto the

substrate, irradiation with an ultraviolet radiation X including a radiation with a wavelength of 300 nm to 395 nm, and further application of the color ink.

Preferred embodiments of the ink application step and the electron beam irradiation step in the recording method B are the same as the preferred embodiments of the ink application step and the electron beam irradiation step described in the section of the image recording method above.

EXAMPLES

Hereinafter, Examples of the present disclosure will be described, but the present disclosure is not limited to the following Examples.

"Parts" means parts by mass.

Preparation of Pigment Dispersion

Components listed in Composition of Cyan Dispersion D1C given below were placed in a Motor Mill M50 disperser (manufactured by Eiger Machinery, Inc.) and dispersed for 4 hours at a rotation speed of 9 m/s using zirconia beads having a diameter of 0.65 mm, thereby obtaining a cyan pigment dispersion D1C.

A magenta dispersion D1M, a yellow dispersion D1Y, a black dispersion D1K, and a white dispersion D1W were also prepared in the same manner.

Composition of Cyan Dispersion D1C

· IRGALITE BLUE GLVO (cyan pigment, manufactured by BASF Japan Ltd.)
30 parts
· SR9003 (polyfunctional polymerizable compound, propoxylated (2) neopentyl glycol diacrylate, manufactured by Sartomer)
62 parts
· SOLSPERSE 32000 (dispersing agent, manufactured by Noveon)
8 parts

Composition of Magenta Dispersion D1M

· CINQUASIA MAGENTA RT-355-D (magenta pigment, manufactured by BASF Japan Ltd.) 30 parts
· SR9003 (polyfunctional polymerizable compound, propoxylated (2) neopentyl glycol diacrylate, manufactured by Sartomer)
60 parts
· SOLSPERSE 32000 (dispersing agent, manufactured by Noveon)
10 parts

Composition of Yellow Dispersion D1Y

· NOVOPERM YELLOW H2G (yellow pigment, manufactured by Clariant)
30 parts
SR9003 (polyfunctional polymerizable compound, propoxylated (2) neopentyl glycol diacrylate, manufactured by Sartomer)
60 parts
· SOLSPERSE 32000 (dispersing agent, manufactured by Noveon)
10 parts

Composition of Black Dispersion D1K

· SPECIAL BLACK 250 (black pigment, Orion Engineered Carbons)
40 parts
SR9003 (polyfunctional polymerizable compound, propoxylated (2) neopentyl glycol diacrylate, manufactured by Sartomer)
50 parts
· SOLSPERSE 32000 (dispersing agent, manufactured by Noveon)
10 parts

Composition of White Dispersion D1W

· KRONOS 2300 (white pigment, manufactured by KRONOS)
50 parts
SR9003 (polyfunctional polymerizable compound, propoxylated (2) neopentyl glycol diacrylate, manufactured by Sartomer)
46.5 parts
· SOLSPERSE 41000 (dispersing agent, manufactured by Noveon)
3.5 parts

Preparation of Ink Jet Ink for Electron Beam Curing

Components shown in Table 1 to Table 5 were mixed and stirred to prepare inks C1 to C21 (cyan inks), inks M1 to M17 (magenta inks), inks Y1 to Y17 (yellow inks), inks K1 to K17 (black inks), and inks W1 to W17 (white inks) serving as ink jet inks for electron beam curing.

Numerical values in the columns of the components in Table 1 to Table 5 are in terms of parts by mass, and blanks each mean the absence of the corresponding component. Inks C1, C11, M1, M11, Y1, Y11, K1, K11, W1, and W11 represent reference examples outside the scope of the appended claims.

Details of the components in Table 1 to Table 5 are as follows.

· SR341 polyfunctional polymerizable compound, 3-methyl-1,5-pentanediol diacrylate, manufactured by Sartomer.
· A-200 polyfunctional polymerizable compound, polyethylene glycol (200) diacrylate, manufactured by Sartomer.
· Viscoat #200 monofunctional polymerizable compound, cyclic trimethylolpropane formal acrylate (CTFA), manufactured by Osaka Organic Chemical Industry Ltd.
· 4-HBA monofunctional polymerizable compound, 4-hydroxybutyl acrylate, manufactured by Osaka Organic Chemical Industry Ltd.
· Speedcure 7010 hydrogen abstraction type initiator having a molecular weight of 1,899, thioxanthone compound, manufactured by Lambson.
· Omnipol TX hydrogen abstraction type initiator having a molecular weight of 790, thioxanthone compound, manufactured by IGM Resins B.V.
· Omnipol BP hydrogen abstraction type initiator having a molecular weight of 730, benzophenone compound, manufactured by IGM Resins B.V.
· Omnipol ASA amine having a molecular weight of 510, manufactured by IGM Resins B.V.
· Photomer 5006 amine having a molecular weight of 650, manufactured by IGM Resins B.V.
· Genomer 5795 amine having a molecular weight of 4700, manufactured by IGM Resins B.V.
· Genomer 5271 amine having a molecular weight of 2300, manufactured by IGM Resins B.V.
· Genomer 5275 amine having a molecular weight of 3100, manufactured by Rahn AG.
· Omnipol TP non-hydrogen abstraction type initiator (acylphosphine oxide-based initiator) having a molecular weight of 1035, comparative initiator, manufactured by IGM Resins B.V.
· ITX hydrogen abstraction type initiator (isopropylthioxanthone) having a molecular weight of 254, comparative initiator.
· UV-22 polymerization inhibitor, Irgastab (registered trademark) UV-22, Poly[oxy(methyl-1,2-ethanediyl)],α,α',α"-1,2,3-propanetriyltris[ω-[(1-oxo-2-propen-1-yl)oxy]-,2,6-bis(1,1-dimethylethyl)-4-(phenylenemethylene) cyclohexa-2,5-dien-1-one, manufactured by BASF.

- BYK 378 silicone-based surfactant (polyether-modified polydimethylsiloxane), manufactured by BYK Chemie.
- BYK-3760 silicone-based surfactant, manufactured by BYK Chemie.
- BYK-350 acrylic surfactant, manufactured by BYK Chemie.

Experimental Example C1 (Using Ink C1)

Recording of Solid Image

As an image recording apparatus, the following single pass ink jet recording apparatus was provided.
In the single pass ink jet recording apparatus, five single pass ink jet heads (specifically, Samba head manufactured by Fujifilm Dimattex Corporation, 1200 npi, minimum droplet amount 2 pL; hereinafter also referred to simply as "head") were disposed on a table transport system along a transport path, and an LED light source (385 nm) for pinning exposure was disposed between the heads and downstream of the most downstream head.
The ink W1, the ink C1, the ink M1, the ink Y1, and the ink K1 were introduced into the heads so as to be arranged in this order from the upstream side.
A substrate (specifically, Taiko PET manufactured by Futamura Chemical Co., Ltd., 50 μm thick) subjected to corona treatment immediately before image recording was set on a transport table. While the substrate was transported at a transport speed of 50 m/min, the ink C1 was applied from the head to the substrate in the form of a solid image, and the applied ink C1 was subjected to pinning exposure by irradiation with ultraviolet (UV) from the LED light source disposed on the downstream side of the head. The pinning exposure was performed under the condition of irradiation with UV at an irradiance of 0.40 W/cm$^2$ for 0.024 seconds.
The ink C1 subjected to the pinning exposure was subjected to electronic beam (EB) irradiation at an acceleration voltage of 90 KV and an irradiation dose of 60 KGy. Thus, the ink C1 was finally cured to obtain a cyan solid image.

Recording of Line Image

A cyan line image of 1 pt was obtained in the same manner as the solid image except that the ink C1 was applied in the form of a line image.

Evaluation

The following evaluations were performed on the above images.
The results are shown in Table 1.

Image Quality

For the line image, raggedness (i.e., deviation of an edge of the obtained line image from an ideal edge obtained by the least squares method) was measured using a dot analyzer (manufactured by Oji Scientific Instruments; DA6000), and based on the measurement results, image quality was evaluated according to the following evaluation criteria. In the following evaluation criteria, the rank indicating highest image quality is A.

Evaluation Criteria for Image Quality

A: The line image has a raggedness of less than 4.0.
B: The line image has a raggedness of 4.0 or more and less than 5.0.
C: The line image has a raggedness of 5.0 or more and less than 6.0.
D: The line image has a raggedness of 6.0 or more and less than 7.0.
E: The line image has a raggedness of 7.0 or more.

Amount of Migration

A sample having an area of 0.01 m$^2$ was cut out from the solid image portion of the substrate on which the solid image was recorded, and a liquid mixture of water and ethanol at 70:30 (volume ratio) was dropped in an amount of 10 mL on the surface of the solid image of the cut-out sample.
The sample on which the liquid mixture was dropped was placed in an airtight glass container so that the dropped liquid mixture did not volatilize, and was left to stand at 40°C for 10 days.

After the standing for 10 days, the total amount of components leaching out of the solid image into the dropped liquid mixture (hereinafter referred to as the amount of migration) was measured, and evaluation was performed according to the following evaluation criteria.
The measurement of the amount of migration was performed by volatilizing the water-ethanol liquid mixture after the standing for 10 days and measuring the mass of remaining components.
In the following evaluation criteria, the rank indicating that migration is most suppressed is A.

Evaluation Criteria for Amount of Migration

A: The amount of migration is 0 ppb.
B: The amount of migration is more than 0 ppb and less than 10 ppb.
C: The amount of migration is more than 10 ppb and 1 ppm or less.
D: The amount of migration is more than 1 ppm and 10 ppm or less.
E: The amount of migration is more than 10 ppm.

Adhesiveness

The solid image recorded on the substrate was subjected to a cross-hatch test in accordance with ISO2409 (cross-cut method), and the adhesiveness of the solid image to the substrate was evaluated according to the following evaluation criteria.
In this cross-hatch test, cutting was performed at 1-mm intervals to form a grid of 25 squares of side 1 mm.
In the following evaluation criteria, the rank indicating highest adhesiveness is A.
In the following evaluation criteria, the percentage (%) of flaked squares is a value determined by the following formula. The total number of squares in the following formula is 25.

Percentage (%) of flaked squares = [(number of flaked squares)/(total number of squares)] $\times$ 100

Evaluation Criteria for Adhesiveness

A: The percentage (%) of flaked squares was 0%.
B: The percentage (%) of flaked squares was more than 0% and 5% or less.
C: The percentage (%) of flaked squares was more than 5%.

Experimental Examples C2 to C22

The same operation as in Experimental Example C1 was performed except that the ink C1 was replaced with the inks C2 to C22.
The results are shown in Table 1.

Experimental Example C2A

The same operation as in Experimental Example C2 was performed except that the pinning exposure was not performed.
The results are shown in Table 1.

Experimental Example C2B

The same operation as in Experimental Example C2 was performed except that the pinning exposure was not performed and the EB irradiation as final curing was replaced with UV irradiation as final curing. The UV irradiation as final curing was performed using the LED light source (385 nm) under the conditions of irradiation with UV at an irradiance of 5.0 W/cm$^2$ for 0.024 seconds.
The results are shown in Table 1.

Table 1

| | | | | C1 | C2 | C3 | C4 | C5 | C6 | C7 | C8 | C9 | C10 | C11 | C12 | C13 | C14 | C15 | C16 | C17 | C18 | C19 | C20 | C21 | C2A | C2B | C22 |
|---|---|---|---|---|---|---|---|---|---|---|---|---|---|---|---|---|---|---|---|---|---|---|---|---|---|---|---|
| Example No. | | | | C1 | C2 | C3 | C4 | C5 | C6 | C7 | C8 | C9 | C10 | C11 | C12 | C13 | C14 | C15 | C16 | C17 | C18 | C19 | C20 | C21 | C2A | C2B | C22 |
| Ink | Ink No. | | | C1 | C2 | C3 | C4 | C5 | C6 | C7 | C8 | C9 | C10 | C11 | C12 | C13 | C14 | C15 | C16 | C17 | C18 | C19 | C20 | C21 | C2 | C2 | C22 |
| | Cyan pigment dispersion D1C | | | 10 | 10 | 10 | 10 | 10 | 10 | 10 | 10 | 10 | 10 | 10 | 10 | 10 | 10 | 10 | 10 | 10 | 10 | 10 | 10 | 10 | 10 | 10 | 10 |
| | Polymerizable compound | SR341 (polyfunctional) | | 17 | 16 | 17 | 16 | 16 | 16 | 16 | 16 | 16 | 14 | 18 | 17 | 18 | 16 | 16 | 16 | 16 | 16 | 20 | 9 | 7 | 16 | 16 | 15 |
| | | A-200 (polyfunctional) | | 40 | 40 | 40 | 40 | 40 | 40 | 40 | 40 | 40 | 40 | 40 | 40 | 40 | 40 | 40 | 40 | 40 | 39 | 45 | 15 | 14 | 40 | 40 | 40 |
| | | Viscoat #200 (monofunctional) | | 15 | 15 | 15 | 15 | 15 | 15 | 15 | 15 | 15 | 15 | 15 | 15 | 15 | 15 | 15 | 15 | 15 | 14 | 11 | 31 | 33 | 15 | 15 | 15 |
| | | 4-HBA (monofunctional) | | 15 | 15 | 15 | 15 | 15 | 15 | 15 | 15 | 15 | 15 | 15 | 15 | 15 | 15 | 15 | 15 | 15 | 15 | 11 | 31 | 33 | 15 | 15 | 15 |
| | High molecular weight hydrogen abstraction type initiator | Speedcure 7010 | MW = 1899 | 1 | 1 | 1 | 1 | 1 | 1 | 1 | | | 3 | | 0.3 | 1 | 1 | 1 | | | 1 | 1 | 1 | 1 | 1 | 1 | 2 |
| | | Omnipol TX | MW = 790 | | | | | | | | 1 | | | | | | | | | | | | | | | | |
| | | Omnipol BP | MW = 730 | | | | | | | | | 1 | | | | | | | | | | | | | | | |
| | Amine | Omnipol ASA | MW = 510 | | | | 1 | | | | | | | | | | | | | | | | | | | | |
| | | Photomer 5006 | MW = 650 | | | | | 1 | | | | | | | | | | | | | | | | | | | |
| | | Genomer 5795 | MW = 4700 | | | | | | 1 | | | | | | | | | | | | | | | | | | |
| | | Genomer 5271 | MW = 2300 | | 1 | 1 | | | | | 1 | 1 | 1 | | 1 | 1 | 1 | 1 | 1 | 1 | 3 | 1 | 1 | 1 | 1 | 1 | 1 |
| | | Genomer 5275 | MW = 3100 | | | | | | | 1 | | | | | | | | | | | | | | | | | |
| | Comparative initiator (non-hydrogen abstraction type) | Omnipol TP | MW = 1035 | | | | | | | | | | | | | | | | | 1 | | | | | | | |
| | Comparative initiator (low molecular weight) | ITX | MW = 254 | | | | | | | | | | | | | | | | 1 | | | | | | | | |
| | Polymerization inhibitor | UV-22 | | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| | Silicone-based surfactant | BYK-378 | | 2.2 | 2.2 | 1.2 | 2.2 | 2.2 | 2.2 | 2.2 | 2.2 | 2.2 | 2.2 | 2.2 | 2.2 | 0.1 | | | 2.2 | 2.2 | 2.2 | 2.2 | 2.2 | 2.2 | 2.2 | 2.2 | 2.2 |
| | | BYK-3760 | | | | | | | | | | | | | | | 2.2 | | | | | | | | | | |
| | Acrylic surfactant | BYK-350 | | | | | | | | | | | | | | | | 2.2 | | | | | | | | | |
| | Monofunctional/polyfunctional | | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.3 | 2.1 | 2.4 | 0.5 | 0.5 | 0.5 |
| Image recording | Condition | Pinning exposure | | yes | yes | yes | yes | yes | yes | yes | yes | yes | yes | yes | yes | yes | yes | yes | yes | yes | yes | yes | yes | yes | no | no | yes |
| | | Final curing | | EB | EB | EB | EB | EB | EB | EB | EB | EB | EB | EB | EB | EB | EB | EB | EB | EB | EB | EB | EB | EB | EB | UV | EB |
| | Evaluation | Image quality | | B | A | A | A | A | A | A | A | A | E | E | B | B | A | C | A | A | C | A | A | A | B | E | A |
| | | Amount of migration | | B | A | A | B | B | A | A | B | C | A | A | A | B | A | C | E | E | A | A | A | B | A | E | A |
| | | Adhesiveness | | A | A | A | A | A | A | A | A | A | A | A | A | A | A | A | A | A | A | B | A | B | A | E | A |
| Remark | | | | Ex. | Ex. | Ex. | Ex. | Ex. | Ex. | Ex. | Ex. | Ex. | CE | CE | Ex. | Ex. | Ex. | Ex. | CE | CE | Ex. | Ex. | Ex. | Ex. | Ex. | CE | Ex. |

As shown in Table 1, in Examples in each of which an ink containing

a polymerization initiator (A) and a polymerizable compound (B),
the polymerization initiator (A) including a hydrogen abstraction type polymerization initiator having a molecular weight of 500 or more,
the content of the polymerization initiator (A) being more than 0 mass% and 2 mass% or less relative to the total amount of the ink,

was used, the image quality of an image was high, and migration was suppressed.
By contrast,

in Comparative Example in which the content of the polymerization initiator (A) was more than 2 mass% (Experimental Example C9),
Comparative Example in which the ink did not contain the polymerization initiator (A) (Experimental Example C10),
Comparative Example in which only a comparative polymerization initiator having a molecular weight of less than 500 was used as a polymerization initiator (Experimental Example C15), and
Comparative Example in which only a non-hydrogen abstraction type comparative polymerization initiator was used as a polymerization initiator (Experimental Example C16), migration was noticeable.

In addition, in Comparative Example in which the content of the polymerization initiator (A) was more than 2 mass% (Experimental Example C9) and Comparative Example in which the ink did not contain the polymerization initiator (A) (Experimental Example C10), the image quality was low.
In Experimental Example C2B (Comparative Example) in which the ink C2 was used not as an ink for electron beam curing but as an ink for UV curing, as compared to Experimental Example C2A (Example) in which the ink C2 was used as an ink for electron beam curing, the image quality, migration, and adhesiveness were low.
These results have confirmed that the ink of the present disclosure (e.g., the inks of Examples) in which the amount of the polymerization initiator is as relatively small as 2 mass% or less may have insufficient curability upon ultraviolet irradiation but has sufficient curability upon electron beam irradiation, that is, it is effective as an ink for electron beam curing.
The results of Experimental Examples C2 and C8 show that when the ink includes a hydrogen abstraction type polymerization initiator having a molecular weight of 1000 or more (C2), migration is further suppressed.
The results of Experimental Examples C1 and C2 show that when the ink further contains an amine having a molecular weight of 500 or more (C2), the image quality is further improved, and migration is further suppressed.
The results of Experimental Examples C2 and C4 to C6 show that when the ink includes an amine having a molecular weight of 1000 or more (C2 and C6), migration is further suppressed.
The results of Experimental Examples C2 and C19 show that when "monofunctional/polyfunctional" (i.e., the mass content ratio of the monofunctional polymerizable compound to the polyfunctional polymerizable compound) is 0.4 or more (C2), the adhesiveness of an image is further improved.
The results of Experimental Examples C20 and C21 show that when "monofunctional/polyfunctional" is 2.3 or less (C2), migration is further suppressed, and the adhesiveness of an image is further improved.
The results of Experimental Examples C2, C14, and C15 show that when the ink contains a silicone-based surfactant (C2 and C14), migration is further suppressed, and the image quality of an image is further improved.
The results of Experimental Examples C2, C3, and C13 show that when the content of the silicone-based surfactant is 1 mass% to 5 mass% relative to the total amount of the ink, migration is further suppressed, and the image quality of an image is further improved. Experimental Examples M1 to M17, M2A, and M2B
The same operation as in Experimental Examples C1 to C17, C2A, and C2B was performed except that the ink used for image recording was changed as shown in Table 2.
The results are shown in Table 2.

Experimental Examples Y1 to Y17, Y2A, and Y2B

The same operation as in Experimental Examples C1 to C17, C2A, and C2B was performed except that the ink used for image recording was changed as shown in Table 3.
The results are shown in Table 3.

Experimental Examples K1 to K17, K2A, and K2B

The same operation as in Experimental Examples C1 to C17, C2A, and C2B was performed except that the ink

used for image recording was changed as shown in Table 4.

The results are shown in Table 4.

Experimental Examples W1 to W17, W2A, and W2B

The same operation as in Experimental Examples C1 to C17, C2A, and C2B was performed except that the ink used for image recording was changed as shown in Table 5.

The results are shown in Table 5.

Table 2

| | | | | M1 | M2 | M3 | M4 | M5 | M6 | M7 | M8 | M9 | M10 | M11 | M12 | M13 | M14 | M15 | M16 | M17 | M2A | M2B |
|---|---|---|---|---|---|---|---|---|---|---|---|---|---|---|---|---|---|---|---|---|---|---|
| Example No. | | | | M1 | M2 | M3 | M4 | M5 | M6 | M7 | M8 | M9 | M10 | M11 | M12 | M13 | M14 | M15 | M16 | M17 | M2A | M2B |
| Ink | Ink No. | | | M1 | M2 | M3 | M4 | M5 | M6 | M7 | M8 | M9 | M10 | M11 | M12 | M13 | M14 | M15 | M16 | M17 | M2 | M2 |
| | Magenta pigment dispersion D1M | | | 17 | 17 | 17 | 17 | 17 | 17 | 17 | 17 | 17 | 17 | 17 | 17 | 17 | 17 | 17 | 17 | 17 | 17 | 17 |
| | Polymerizable compound | SR341 (polyfunctional) | | 11 | 11 | 12 | 11 | 11 | 11 | 11 | 11 | 11 | 11 | 11 | 11 | 11 | 11 | 11 | 11 | 11 | 11 | 11 |
| | | A-200 (polyfunctional) | | 38 | 37 | 37 | 37 | 37 | 37 | 37 | 37 | 37 | 35 | 39 | 38 | 40 | 40 | 38 | 38 | 37 | 37 | 37 |
| | | Viscoat #200 (monofunctional) | | 15 | 15 | 15 | 15 | 15 | 15 | 15 | 15 | 15 | 15 | 15 | 15 | 15 | 15 | 15 | 15 | 15 | 15 | 15 |
| | | 4-HBA (monofunctional) | | 15 | 15 | 15 | 15 | 15 | 15 | 15 | 15 | 15 | 15 | 15 | 15 | 15 | 15 | 15 | 15 | 15 | 15 | 15 |
| | High molecular weight hydrogen abstraction type initiator | Speedcure 7010 | MW = 1899 | 1 | 1 | 1 | 1 | 1 | 1 | 1 | | | 3 | | 0.3 | 1 | 1 | 1 | | | 1 | 1 |
| | | Omnipol TX | MW = 790 | | | | | | | | 1 | | | | | | | | | | | |
| | | Omnipol BP | MW = 730 | | | | | | | | | 1 | | | | | | | | | | |
| | Amine | Omnipol ASA | MW = 510 | | | | 1 | | | | | | | | | | | | | | | |
| | | Photomer 5006 | MW = 650 | | | | | 1 | | | | | | | | | | | | | | |
| | | Genomer 5795 | MW = 4700 | | | | | | 1 | | | | | | | | | | | | | |
| | | Genomer 5271 | MW = 2300 | | 1 | 1 | | | | | 1 | 1 | 1 | | 1 | 1 | 1 | 1 | 1 | 1 | 1 | 1 |
| | | Genomer 5275 | MW = 3100 | | | | | | | 1 | | | | | | | | | | | | |
| | Comparative initiator (non-hydrogen abstraction type) | Omnipol TP | MW = 1035 | | | | | | | | | | | | | | | | | 1 | | |
| | Comparative initiator (low molecular weight) | ITX | MW = 254 | | | | | | | | | | | | | | | | 1 | | | |
| | Polymerization inhibitor | UV-22 | | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| | Silicone-based surfactant | BYK-378 | | 2.2 | 2.2 | 1.2 | 2.2 | 2.2 | 2.2 | 2.2 | 2.2 | 2.2 | 2.2 | 2.2 | 2.2 | 0.1 | | | | 2.2 | 2.2 | 2.2 |
| | | BYK-3760 | | | | | | | | | | | | | | | 0.1 | 2.2 | | | | |
| | Acrylic surfactant | BYK-350 | | | | | | | | | | | | | | | | | 2.2 | | | |
| | Monofunctional/polyfunctional | | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Image recording | Condition | Pinning exposure | | yes | yes | yes | yes | yes | yes | yes | yes | yes | yes | yes | yes | yes | yes | yes | yes | yes | no | no |
| | | Final curing | | EB | EB | EB | EB | EB | EB | EB | EB | EB | EB | EB | EB | EB | EB | EB | EB | EB | EB | UV |
| | Evaluation | Image quality | | B | A | A | A | A | A | A | A | A | E | E | B | B | A | C | A | A | B | E |
| | | Amount of migration | | B | A | A | B | B | A | A | B | C | A | A | A | B | A | C | E | E | A | E |
| | | Adhesiveness | | A | A | A | A | A | A | A | A | A | A | A | A | A | A | A | A | A | A | E |
| Remark | | | | Ex. | Ex. | Ex. | Ex. | Ex. | Ex. | Ex. | Ex. | Ex. | CE | CE | Ex. | Ex. | Ex. | Ex. | CE | CE | Ex. | CE |

Table 3

| | | | | Y1 | Y2 | Y3 | Y4 | Y5 | Y6 | Y7 | Y8 | Y9 | Y10 | Y11 | Y12 | Y13 | Y14 | Y15 | Y16 | Y17 | Y2A | Y2B |
|---|---|---|---|---|---|---|---|---|---|---|---|---|---|---|---|---|---|---|---|---|---|---|
| Example No. | | | | Y1 | Y2 | Y3 | Y4 | Y5 | Y6 | Y7 | Y8 | Y9 | Y10 | Y11 | Y12 | Y13 | Y14 | Y15 | Y16 | Y17 | Y2A | Y2B |
| Ink | Ink No. | | | Y1 | Y2 | Y3 | Y4 | Y5 | Y6 | Y7 | Y8 | Y9 | Y10 | Y11 | Y12 | Y13 | Y14 | Y15 | Y16 | Y17 | Y2 | Y2 |
| | Yellow pigment dispersion D1Y | | | 10 | 10 | 10 | 10 | 10 | 10 | 10 | 10 | 10 | 10 | 10 | 10 | 10 | 10 | 10 | 10 | 10 | 10 | 10 |
| | Polymerizable compound | SR341 (polyfunctional) | | 16 | 15 | 16 | 15 | 15 | 15 | 15 | 15 | 15 | 13 | 17 | 16 | 18 | 16 | 16 | 15 | 16 | 15 | 15 |
| | | A-200 (polyfunctional) | | 40 | 40 | 40 | 40 | 40 | 40 | 40 | 40 | 40 | 40 | 40 | 40 | 40 | 40 | 40 | 40 | 40 | 40 | 40 |
| | | Viscoat #200 (monofunctional) | | 15 | 15 | 15 | 15 | 15 | 15 | 15 | 15 | 15 | 15 | 15 | 15 | 15 | 15 | 15 | 15 | 15 | 15 | 15 |
| | | 4-HBA (monofunctional) | | 15 | 15 | 15 | 15 | 15 | 15 | 15 | 15 | 15 | 15 | 15 | 15 | 15 | 15 | 15 | 15 | 15 | 15 | 15 |
| | High molecular weight hydrogen abstraction type initiator | Speedcure 7010 | MW = 1899 | 1 | 1 | 1 | 1 | 1 | 1 | 1 | | | 3 | | 0.3 | 1 | 1 | 1 | | | 1 | 1 |
| | | Omnipol TX | MW = 790 | | | | | | | | 1 | | | | | | | | | | | |
| | | Omnipol BP | MW = 730 | | | | | | | | | 1 | | | | | | | | | | |
| | Amine | Omnipol ASA | MW = 510 | | | | 1 | | | | | | | | | | | | | | | |
| | | Photomer 5006 | MW = 650 | | | | | 1 | | | | | | | | | | | | | | |
| | | Genomer 5795 | MW = 4700 | | | | | | 1 | | | | | | | | | | | | | |
| | | Genomer 5271 | MW = 2300 | | 1 | 1 | | | | | 1 | 1 | 1 | | 1 | 1 | 1 | 1 | 1 | 1 | 1 | 1 |
| | | Genomer 5275 | MW = 3100 | | | | | | | 1 | | | | | | | | | | | | |
| | Comparative initiator (non-hydrogen abstraction type) | Omnipol TP | MW = 1035 | | | | | | | | | | | | | | | | | | | |
| | Comparative initiator (low molecular weight) | ITX | MW = 254 | | | | | | | | | | | | | | | | 1 | | | |
| | Polymerization inhibitor | UV-22 | | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| | Silicone-based surfactant | BYK-378 | | 2.2 | 2.2 | 1.2 | 2.2 | 2.2 | 2.2 | 2.2 | 2.2 | 2.2 | 2.2 | 2.2 | 2.2 | 0.1 | | | 2.2 | 2.2 | 2.2 | 2.2 |
| | | BYK-3760 | | | | | | | | | | | | | | | 2.2 | | | | | |
| | Acrylic surfactant | BYK-350 | | | | | | | | | | | | | | | | 2.2 | | | | |
| | Monofunctional/polyfunctional | | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Image recording | Condition | Pinning exposure | | yes | yes | yes | yes | yes | yes | yes | yes | yes | yes | yes | yes | yes | yes | yes | yes | yes | no | no |
| | | Final curing | | EB | EB | EB | EB | EB | EB | EB | EB | EB | EB | EB | EB | EB | EB | EB | EB | EB | EB | UV |
| | Evaluation | Image quality | | B | A | A | A | A | A | A | A | A | E | E | B | B | A | C | A | A | B | E |
| | | Amount of migration | | B | A | A | B | B | A | A | B | C | A | A | A | B | A | C | E | E | A | E |
| | | Adhesiveness | | A | A | A | A | A | A | A | A | A | A | A | A | A | A | A | A | A | A | E |
| Remark | | | | Ex. | Ex. | Ex. | Ex. | Ex. | Ex. | Ex. | Ex. | Ex. | CE | CE | Ex. | Ex. | Ex. | Ex. | CE | CE | Ex. | CE |

Table 4

| | | | | K1 | K2 | K3 | K4 | K5 | K6 | K7 | K8 | K9 | K10 | K11 | K12 | K13 | K14 | K15 | K16 | K17 | K2A | K2B |
|---|---|---|---|---|---|---|---|---|---|---|---|---|---|---|---|---|---|---|---|---|---|---|
| Example No. | | | | K1 | K2 | K3 | K4 | K5 | K6 | K7 | K8 | K9 | K10 | K11 | K12 | K13 | K14 | K15 | K16 | K17 | K2A | K2B |
| Ink | Ink No. | | | K1 | K2 | K3 | K4 | K5 | K6 | K7 | K8 | K9 | K10 | K11 | K12 | K13 | K14 | K15 | K16 | K17 | K2 | K2 |
| | Black pigment dispersion D1K | | | 6 | 6 | 6 | 6 | 6 | 6 | 6 | 6 | 6 | 6 | 6 | 6 | 6 | 6 | 6 | 6 | 6 | 6 | 6 |
| | Polymerizable compound | SR341 (polyfunctional) | | 20 | 19 | 21 | 19 | 19 | 19 | 19 | 19 | 19 | 17 | 21 | 20 | 22 | 20 | 20 | 19 | 19 | 19 | 19 |
| | | A-200 (polyfunctional) | | 41 | 41 | 40 | 41 | 41 | 41 | 41 | 41 | 41 | 41 | 41 | 41 | 40 | 40 | 40 | 41 | 41 | 41 | 41 |
| | | Viscoat #200 (monofunctional) | | 15 | 15 | 15 | 15 | 15 | 15 | 15 | 15 | 15 | 15 | 15 | 15 | 15 | 15 | 15 | 15 | 15 | 15 | 15 |
| | | 4-HBA (monofunctional) | | 15 | 15 | 15 | 15 | 15 | 15 | 15 | 15 | 15 | 15 | 15 | 15 | 15 | 15 | 15 | 15 | 15 | 15 | 15 |
| | High molecular weight hydrogen abstraction type initiator | Speedcure 7010 | MW = 1899 | 1 | 1 | 1 | 1 | 1 | 1 | 1 | | | 3 | | 0.3 | 1 | 1 | 1 | | | 1 | 1 |
| | | Omnipol TX | MW = 790 | | | | | | | | 1 | | | | | | | | | | | |
| | | Omnipol BP | MW = 730 | | | | | | | | | 1 | | | | | | | | | | |
| | Amine | Omnipol ASA | MW = 510 | | | | 1 | | | | | | | | | | | | | | | |
| | | Photomer 5006 | MW = 650 | | | | | 1 | | | | | | | | | | | | | | |
| | | Genomer 5795 | MW = 4700 | | | | | | 1 | | | | | | | | | | | | | |
| | | Genomer 5271 | MW = 2300 | | 1 | 1 | | | | | 1 | 1 | 1 | | 1 | 1 | 1 | 1 | 1 | 1 | 1 | 1 |
| | | Genomer 5275 | MW = 3100 | | | | | | | 1 | | | | | | | | | | | | |
| | Comparative initiator (non-hydrogen abstraction type) | Omnipol TP | MW = 1035 | | | | | | | | | | | | | | | | | 1 | | |
| | Comparative initiator (low molecular weight) | ITX | MW = 254 | | | | | | | | | | | | | | | | 1 | | | |
| | Polymerization inhibitor | UV-22 | | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| | Silicone-based surfactant | BYK-378 | | 2.2 | 2.2 | 1.2 | 2.2 | 2.2 | 2.2 | 2.2 | 2.2 | 2.2 | 2.2 | 2.2 | 2.2 | 0.1 | | | 2.2 | 2.2 | 2.2 | 2.2 |
| | | BYK-3760 | | | | | | | | | | | | | | | 2.2 | | | | | |
| | Acrylic surfactant | BYK-350 | | | | | | | | | | | | | | | | 2.2 | | | | |
| | Monofunctional/polyfunctional | | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Image recording | Condition | Pinning exposure | | yes | yes | yes | yes | yes | yes | yes | yes | yes | yes | yes | yes | yes | yes | yes | yes | yes | no | no |
| | | Final curing | | EB | EB | EB | EB | EB | EB | EB | EB | EB | EB | EB | EB | EB | EB | EB | EB | EB | EB | UV |
| | Evaluation | Image quality | | B | A | A | A | A | A | A | A | A | E | E | B | B | A | C | A | A | B | E |
| | | Amount of migration | | B | A | A | B | B | A | A | B | C | A | A | A | B | A | C | E | E | A | E |
| | | Adhesiveness | | A | A | A | A | A | A | A | A | A | A | A | A | A | A | A | A | A | A | E |
| Remark | | | | Ex. | Ex. | Ex. | Ex. | Ex. | Ex. | Ex. | Ex. | Ex. | CE | CE | Ex. | Ex. | Ex. | Ex. | CE | CE | Ex. | CE |

Table 5

| | | | | W1 | W2 | W3 | W4 | W5 | W6 | W7 | W8 | W9 | W10 | W11 | W12 | W13 | W14 | W15 | W16 | W17 | W2A | W2B |
|---|---|---|---|---|---|---|---|---|---|---|---|---|---|---|---|---|---|---|---|---|---|---|
| Example No. | | | | W1 | W2 | W3 | W4 | W5 | W6 | W7 | W8 | W9 | W10 | W11 | W12 | W13 | W14 | W15 | W16 | W17 | W2A | W2B |
| Ink | Ink No. | | | W1 | W2 | W3 | W4 | W5 | W6 | W7 | W8 | W9 | W10 | W11 | W12 | W13 | W14 | W15 | W16 | W17 | W2 | W2 |
| | White pigment dispersion D1W | | | 30 | 30 | 30 | 30 | 30 | 30 | 30 | 30 | 30 | 30 | 30 | 30 | 30 | 30 | 30 | 30 | 30 | 30 | 30 |
| | Polymerizable compound | SR341 (polyfunctional) | | 11 | 11 | 12 | 11 | 11 | 11 | 11 | 11 | 11 | 11 | 11 | 11 | 11 | 11 | 11 | 11 | 11 | 11 | 11 |
| | | A-200 (polyfunctional) | | 27 | 25 | 25 | 26 | 26 | 26 | 26 | 26 | 26 | 24 | 28 | 26 | 27 | 26 | 26 | 26 | 26 | 26 | 26 |
| | | Viscoat #200 (monofunctional) | | 15 | 15 | 15 | 15 | 15 | 15 | 15 | 15 | 15 | 15 | 15 | 15 | 15 | 15 | 15 | 15 | 15 | 15 | 15 |
| | | 4-HBA (monofunctional) | | 15 | 15 | 15 | 15 | 15 | 15 | 15 | 15 | 15 | 15 | 15 | 15 | 15 | 15 | 15 | 15 | 15 | 15 | 15 |
| | High molecular weight hydrogen abstraction type initiator | Speedcure 7010 | MW = 1899 | 1 | 1 | 1 | 1 | 1 | 1 | 1 | | | 3 | | 0.3 | 1 | 1 | 1 | | | 1 | 1 |
| | | Omnipol TX | MW = 790 | | | | | | | | 1 | | | | | | | | | | | |
| | | Omnipol BP | MW = 730 | | | | | | | | | 1 | | | | | | | | | | |
| | Amine | Omnipol ASA | MW = 510 | | | | 1 | | | | | | | | | | | | | | | |
| | | Photomer 5006 | MW = 650 | | | | | 1 | | | | | | | | | | | | | | |
| | | Genomer 5795 | MW = 4700 | | | | | | 1 | | | | | | | | | | | | | |
| | | Genomer 5271 | MW = 2300 | | 1 | 1 | | | | | 1 | 1 | 1 | | 1 | 1 | 1 | 1 | 1 | 1 | 1 | 1 |
| | | Genomer 5275 | MW = 3100 | | | | | | | 1 | | | | | | | | | | | | |
| | Comparative initiator (non-hydrogen abstraction type) | Omnipol TP | MW = 1035 | | | | | | | | | | | | | | | | | 1 | | |
| | Comparative initiator (low molecular weight) | ITX | MW = 254 | | | | | | | | | | | | | | | | 1 | | | |
| | Polymerization inhibitor | UV-22 | | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| | Silicone-based surfactant | BYK-378 | | 1.2 | 1.8 | 1.2 | 1.2 | 1.2 | 1.2 | 1.2 | 1.2 | 1.2 | 1.2 | 1.2 | 1.2 | 0.1 | | | 1.2 | 1.2 | 1.2 | 1.2 |
| | | BYK-3760 | | | | | | | | | | | | | | | 1.2 | | | | | |
| | Acrylic surfactant | BYK-350 | | | | | | | | | | | | | | | | 1.2 | | | | |
| | Monofunctional/polyfunctional | | | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 |
| Image recording | Condition | Pinning exposure | | yes | yes | yes | yes | yes | yes | yes | yes | yes | yes | yes | yes | yes | yes | yes | yes | yes | no | no |
| | | Final curing | | EB | EB | EB | EB | EB | EB | EB | EB | EB | EB | EB | EB | EB | EB | EB | EB | EB | EB | UV |
| | Evaluation | Image quality | | B | A | A | A | A | A | A | A | A | E | E | B | B | A | C | A | A | B | E |
| | | Amount of migration | | B | A | A | B | B | A | A | B | C | A | A | A | B | A | C | E | E | A | E |
| | | Adhesiveness | | A | A | A | A | A | A | A | A | A | A | A | A | A | A | A | A | A | A | E |
| Remark | | | | Ex. | Ex. | Ex. | Ex. | Ex. | Ex. | Ex. | Ex. | Ex. | CE | CE | Ex. | Ex. | Ex. | Ex. | CE | CE | Ex. | CE |

As shown in Table 2 to Table 5, it has been confirmed that also when inks of other colors are used instead of the cyan ink, the same results as obtained when the cyan ink is used (Table 1) are obtained.

Experimental Example 101

Recording of Solid Image

The same single pass ink jet recording apparatus as used in Example C1 was provided.
The ink W3, the ink C2, the ink M2, the ink Y2, and the ink K2 were introduced into the heads so as to be arranged in this order from the upstream side.
A substrate (specifically, Taiko PET manufactured by Futamura Chemical Co., Ltd., 50 μm thick) subjected to corona treatment immediately before image recording was set on a transport table.
While the substrate was transported at a transport speed of 50 m/min,

application of the ink W3,
pinning exposure of the applied ink W3,
application of the ink C2,
pinning exposure of the applied ink C2,
application of the ink M2,
pinning exposure of the applied ink M2,
application of the ink Y2,
pinning exposure of the applied ink Y2,
application of the ink K2,
pinning exposure of the applied ink K2, and
EB irradiation as final curing

were performed in this order on the substrate.
Thus, a multicolored solid image was obtained.
Specifically, a multicolor solid image A described below and a multicolor solid image B described below were recorded as multicolored solid images.
The multicolor solid image A is an image in which cyan, magenta, yellow, and black 1 cm × 10 cm rectangular images are arranged adjacent to each other on a white image having a dot percentage of 100%.
The multicolor solid image B is an image in which a 5 cm × 15 cm rectangular 4C Solid image (the dot percentage of each color is 50%) in which cyan, magenta, yellow, and black are superimposed on each other is arranged on a white image having a dot percentage of 100%. Recording of Line Image
A multicolor line image was recorded in the same manner as the recording of the multicolored solid images except that a multicolor image having a configuration in which cyan, magenta, yellow, and black line images of 1 pt were arranged on a white solid image having a dot percentage of 100% was recorded by varying the ink application region.

Evaluation

The above multicolored images (the multicolor solid image A, the multicolor solid image B, and the multicolor line image) were evaluated in the same manner as the evaluations (image quality, the amount of migration, and adhesiveness) in Example C1.
The evaluation of image quality was performed using the multicolor line image, the evaluation of the amount of migration was performed using the multicolor solid image B, and the evaluation of adhesiveness was performed using the multicolor solid image B.
Furthermore, the following evaluation of color bleeding was performed using the multicolor solid image A, and furthermore, the following evaluation of image deformation was performed using a multicolor image for image deformation evaluation described below.
The results are shown in Table 6.
In Table 6, "Dynamic surface tension" means a dynamic surface tension γ of an ink at 500 μs after application of the ink.

Evaluation of Color Bleeding

The multicolor solid image A was visually observed to check the bleeding between adjacent colors. Based on the observation results, color bleeding was evaluated according to the following evaluation criteria.

Evaluation Criteria for Color Bleeding

A: There is no bleeding at all between adjacent colors.
B: Black slightly bleeds into yellow.
C: Black bleeds into yellow.
D: Bleeding is observed between all colors.
E: Significant bleeding is observed between all colors.

Evaluation of Image Deformation

As a multicolored solid image, a multicolor image for image deformation evaluation was obtained as described below.

On a white solid image, a black solid image formed of black ink and having three 1-cm square openings was superimposed. The underlying white solid image was exposed through the three openings in the black solid image. A 1-cm square cyan solid image, a 1-cm square magenta solid image, and a 1-cm square yellow solid image were recorded so as to respectively overlap the three openings (i.e., so as to cover the white solid image exposed through the openings).

Thus, a multicolor image for image deformation evaluation was obtained.

The multicolor image for image deformation evaluation was visually observed to check the presence of deformation of each square solid image, and image deformation was evaluated according to the following evaluation criteria.

Evaluation Criteria for Image Deformation

A: There is no image deformation at all in every square cyan solid image.
B: Slight deformation occurs in the square cyan solid image.
C: Significant image deformation occurs in the square cyan solid image.

Experimental Examples 102 to 105

The same operation as in Experimental Example 101 was performed except that the combination of the inks was changed as shown in Table 6.

The results are shown in Table 6.

Example 106

The same operation as in Experimental Example 101 was performed except that the combination of the inks was changed as shown in Table 6 and pinning exposure was performed only on W3 among the applied inks.

Table 6

| Example No. | | | 101 | 102 | 103 | 104 | 105 | 106 |
|---|---|---|---|---|---|---|---|---|
| Order of ink dropping | W | Ink No. | W3 | W13 | W14 | W15 | W16 | W3 |
| | | Surfactant content (mass%) | 1.2 | 0.1 | 1.2 | 1.2 | 1.2 | 1.2 |
| | | Dynamic surface tension (mN/m) | 26 | 28 | 26 | 37 | 26 | 26 |
| | C | Ink No. | C2 | C13 | C14 | C15 | C3 | C11 |
| | | Surfactant content (mass%) | 2.2 | 0.1 | 2.2 | 2.2 | 1.2 | 2.2 |
| | | Dynamic surface tension (mN/m) | 24 | 28 | 24 | 34 | 26 | 24 |
| | M | Ink No. | M2 | M13 | M14 | M15 | M3 | M11 |
| | | Surfactant content (mass%) | 2.2 | 0.1 | 2.2 | 2.2 | 1.2 | 2.2 |
| | | Dynamic surface tension (mN/m) | 24 | 28 | 24 | 34 | 26 | 24 |
| | Y | Ink No. | Y2 | Y13 | Y14 | Y15 | Y3 | Y11 |
| | | Surfactant content (mass%) | 2.2 | 0.1 | 2.2 | 2.2 | 1.2 | 2.2 |
| | | Dynamic surface tension (mN/m) | 24 | 28 | 24 | 34 | 26 | 24 |
| | K | Ink No. | K2 | K13 | K14 | K15 | K2 | K11 |
| | | Surfactant content (mass%) | 2.2 | 0.1 | 2.2 | 2.2 | 2.2 | 2.2 |
| | | Dynamic surface tension (mN/m) | 24 | 28 | 24 | 34 | 24 | 24 |
| Type of surfactant in ink of each color | | | BY-K-378 | BY-K-378 | BY-K-3760 | BY-K-350 | BY-K-378 | BY-K-378 |
| Pinning exposure after application of ink of each color | | | yes | yes | yes | yes | yes | only W3 |
| Final curing | | | EB | EB | EB | EB | EB | EB |
| Evaluation | Color bleeding | | A | B | A | B | A | A |
| | Image quality (line quality) | | A | B | A | B | A | A |
| | Image deformation | | A | A | A | A | B | A |
| | Amount of migration | | A | A | A | A | A | A |
| | Adhesiveness | | A | A | A | A | A | A |
| Remark | | | Ex. | Ex. | Ex. | Ex. | Ex. | Ex. |

As shown in Table 6, also when a multicolored image was recorded using two or more inks (i.e., an ink set), the image quality (i.e., line quality) of an image was high and migration was suppressed, as in the case where a monochrome image was recorded (Table 1 to Table 5).

Comparison between Experimental Example 101 and Experimental Example 102 have confirmed that when a white ink and a color ink are applied in this order in the ink application step, and a value obtained by subtracting a dynamic surface tension $\gamma$ of the color ink at 500 $\mu$s after application of the color ink from a dynamic surface tension $\gamma$ of the white ink at 500 $\mu$s after application of the white ink is more than 1 mN/m (Experimental Example 101), the image quality of an image is further improved, and color bleeding is further suppressed.

Comparison between Experimental Examples 101 to 104 and Experimental Example 105 have confirmed that when an absolute value of a value obtained by subtracting a dynamic surface tension $\gamma$ (n + 1) of the color ink applied (n + 1)-th at 500 $\mu$s after application of the color ink applied (n + 1)-th from a dynamic surface tension $\gamma$ (n) of the color ink applied n-th at 500 $\mu$s after application of the color ink applied n-th is 1 mN/m or less (Experimental Examples 101 to 104), image deformation is further suppressed.

Comparison between Experimental Example 106 and Experimental Example 101 have confirmed that even when only the ink applied first contains a hydrogen abstraction type initiator and pinning exposure was performed only after the first ink is applied, the image quality of an image is high, and migration is suppressed.

## Claims

1. An ink jet ink for electron beam curing, comprising a polymerization initiator (A) and

   a polymerizable compound (B),
   wherein the polymerization initiator (A) includes a hydrogen abstraction type polymerization initiator having a molecular weight of 500 or more, and
   a content of the polymerization initiator (A) is more than 0 mass% and 2 mass% or less relative to a total amount of the ink jet ink for electron beam curing,
   the ink jet ink for electron beam further comprising an amine having a molecular weight of 500 or more, wherein a content of the amine having a molecular weight of 500 or more is 0.1 mass% to 2 mass% relative to the total amount of the ink jet ink for electron beam curing.

2. The ink jet ink for electron beam curing according to claim 1, wherein a content of the hydrogen abstraction type polymerization initiator having a molecular weight of 500 or more is 0.1 mass% to 2 mass% relative to the total amount of the ink jet ink for electron beam curing.

3. The ink jet ink for electron beam curing according to claim 1 or 2, wherein the hydrogen abstraction type polymerization initiator having a molecular weight of 500 or more is at least one of a thioxanthone compound or a benzophenone compound.

4. The ink jet ink for electron beam curing according to any one of claims 1 to 3, wherein a polymerization initiator other than the hydrogen abstraction type polymerization initiator having a molecular weight of 500 or more is not included, or a content of the polymerization initiator other than the hydrogen abstraction type polymerization initiator having a molecular weight of 500 or more is 0.1 mass% or less relative to the total amount of the ink jet ink for electron beam curing.

5. The ink jet ink for electron beam curing according to any one of claims 1 to 4, wherein the hydrogen abstraction type polymerization initiator having a molecular weight of 500 or more includes a hydrogen abstraction type polymerization initiator having a molecular weight of 1000 or more.

6. The ink jet ink for electron beam curing according to any one of the preceding claims, wherein the amine having a molecular weight of 500 or more includes an amine having a molecular weight of 1000 or more.

7. The ink jet ink for electron beam curing according to any one of claims 1 to 6, wherein the polymerizable compound (B) includes a monofunctional polymerizable compound and a polyfunctional polymerizable compound, and a mass content ratio of the monofunctional polymerizable compound to the polyfunctional polymerizable compound is 0.4 to 2.3.

8. The ink jet ink for electron beam curing according to any one of claims 1 to 7, further comprising a silicone-based surfactant.

9. The ink jet ink for electron beam curing according to claim 8, wherein a content of the silicone-based surfactant is 1 mass% to 5 mass% relative to the total amount of the ink jet ink for electron beam curing.

10. The ink jet ink for electron beam curing according to any one of claims 1 to 9, further comprising a pigment (C).

11. An ink set comprising two or more ink jet inks for electron beam curing, each being the ink jet ink for electron beam

curing according to claim 10, wherein the two or more ink jet inks for electron beam curing are different in hue of the pigment (C).

**12.** The ink set according to claim 11, wherein each of the two or more ink jet inks for electron beam curing contains a silicone-based surfactant, and a content of the silicone-based surfactant is 1 mass% to 5 mass%.

**13.** An ink set comprising:

a white ink that is the ink jet ink for electron beam curing according to claim 10 containing a white pigment as the pigment (C); and
a color ink containing a pigment having a hue other than white,
wherein the color ink contains no polymerization initiators or contains a polymerization initiator in an amount of 0.1 mass% or less relative to a total amount of the color ink.

**14.** An image recording method using the ink jet ink for electron beam curing according to any one of claims 1 to 10, the image recording method comprising:

an ink application step of applying the ink jet ink for electron beam curing onto a substrate; and
an electron beam irradiation step of irradiating the ink jet ink for electron beam curing applied onto the substrate with an electron beam.

**15.** The image recording method according to claim 14,
wherein the ink application step includes applying the ink jet ink for electron beam curing onto the substrate and irradiating the ink jet ink for electron beam curing applied onto the substrate with an ultraviolet radiation X including a radiation with a wavelength of 300 nm to 395 nm, and in the electron beam irradiation step, the ink jet ink for electron beam curing irradiated with the ultraviolet radiation X is irradiated with the electron beam.

**16.** An image recording method using the ink set according to claim 11 or 12, the image recording method comprising:

an ink application step of sequentially applying the two or more ink jet inks for electron beam curing onto a substrate; and
an electron beam irradiation step of irradiating the two or more ink jet inks for electron beam curing applied onto the substrate with an electron beam.

**17.** The image recording method according to claim 16,
wherein in the ink application step, an operation of applying one of the two or more ink jet inks for electron beam curing onto the substrate and irradiating the applied one with an ultraviolet radiation X including a radiation with a wavelength of 300 nm to 395 nm is sequentially performed on the two or more ink jet inks for electron beam curing one by one.

**18.** The image recording method according to claim 16 or 17,

wherein the ink set includes
a white ink that is the ink jet ink for electron beam curing containing a white pigment as the pigment (C), and
a color ink that is the ink jet ink for electron beam curing containing a pigment having a hue other than white as the pigment (C), and
in the ink application step, the white ink and the color ink are applied in this order, and a value obtained by subtracting a dynamic surface tension $\gamma$ of the color ink at 500 $\mu$s after application of the color ink from a dynamic surface tension $\gamma$ of the white ink at 500 $\mu$s after application of the white ink is more than 1 mN/m,
wherein the dynamic surface tension is determined by a maximum bubble pressure method in an environment of 23°C and 55% relative humidity (RH).

**19.** The image recording method according to any one of claims 16 to 18,

wherein the ink set includes a white ink that is the ink jet ink for electron beam curing containing a white pigment as the pigment (C), and
two or more color inks that are each the ink jet ink for electron beam curing containing a pigment having a hue other than white as the pigment (C),
in the ink application step, the white ink is applied, and then the two or more color inks

are sequentially applied, and when n is an integer of 2 or greater, an absolute value of a value obtained by subtracting a dynamic surface tension γ (n + 1) of the color ink applied (n + 1)-th at 500 μs after application of the color ink applied (n + 1)-th from a dynamic surface tension γ (n) of the color ink applied n-th at 500 μs after application of the color ink applied n-th is 1 mN/m or less,
wherein the dynamic surface tension is determined by a maximum bubble pressure method in an environment of 23°C and 55% relative humidity (RH).

**20.** An image recording method using the ink set according to claim 13, the image recording method comprising:

an ink application step of applying the white ink and the color ink in this order onto a substrate, and
an electron beam irradiation step of performing electron beam irradiation after application of the white ink onto the substrate, irradiation with an ultraviolet radiation X including a radiation with a wavelength of 300 nm to 395 nm, and further application of the color ink.

**Patentansprüche**

**1.** Tintenstrahltinte zur Elektronenstrahlhärtung, umfassend einen Polymerisationsinitiator (A) und eine polymerisierbare Verbindung (B),

wobei der Polymerisationsinitiator (A) einen Polymerisationsinitiator des Wasserstoffabstraktionstyps, der ein Molekulargewicht von 500 oder mehr aufweist, enthält, und
ein Gehalt des Polymerisationsinitiators (A) mehr als 0 Massen-% und 2 Massen-% oder weniger relativ zu einer Gesamtmenge der Tintenstrahltinte zur Elektronenstrahlhärtung beträgt,
wobei die Tintenstrahltinte zur Elektronenstrahlhärtung ferner ein Amin mit einem Molekulargewicht von 500 oder mehr umfasst, wobei ein Gehalt des Amins mit einem Molekulargewicht von 500 oder mehr 0,1 Massen-% bis 2 Massen-% relativ zu der Gesamtmenge der Tintenstrahltinte zur Elektronenstrahlhärtung beträgt.

**2.** Tintenstrahltinte zur Elektronenstrahlhärtung nach Anspruch 1, wobei ein Gehalt des Polymerisationsinitiators des Wasserstoffabstraktionstyps, der ein Molekulargewicht von 500 oder mehr aufweist, 0,1 Massen-% bis 2 Massen-% relativ zu der Gesamtmenge der Tintenstrahltinte zur Elektronenstrahlhärtung beträgt.

**3.** Tintenstrahltinte zur Elektronenstrahlhärtung nach Anspruch 1 oder 2, wobei der Polymerisationsinitiator des Wasserstoffabstraktionstyps, der ein Molekulargewicht von 500 oder mehr aufweist, mindestens eines von einer Thioxanthonverbindung und einer Benzophenonverbindung ist.

**4.** Tintenstrahltinte zur Elektronenstrahlhärtung nach einem der Ansprüche 1 bis 3, wobei ein anderer Polymerisationsinitiator als der Polymerisationsinitiator des Wasserstoffabstraktionstyps, der ein Molekulargewicht von 500 oder mehr aufweist, nicht enthalten ist, oder ein Gehalt des anderen Polymerisationsinitiators als des Polymerisationsinitiators des Wasserstoffabstraktionstyps, der ein Molekulargewicht von 500 oder mehr aufweist, 0,1 Massen-% oder weniger relativ zu der Gesamtmenge der Tintenstrahltinte zur Elektronenstrahlhärtung beträgt.

**5.** Tintenstrahltinte zur Elektronenstrahlhärtung nach einem der Ansprüche 1 bis **4,** wobei der Polymerisationsinitiator des Wasserstoffabstraktionstyps, der ein Molekulargewicht von 500 oder mehr aufweist, einen Polymerisationsinitiator des Wasserstoffabstraktionstyps, der ein Molekulargewicht von 1000 oder mehr aufweist, enthält.

**6.** Tintenstrahltinte zur Elektronenstrahlhärtung nach einem der vorstehenden Ansprüche, wobei das Amin mit einem Molekulargewicht von 500 oder mehr ein Amin mit einem Molekulargewicht von 1000 oder mehr enthält.

**7.** Tintenstrahltinte zur Elektronenstrahlhärtung nach einem der Ansprüche 1 bis 6, wobei die polymerisierbare Verbindung (B) eine monofunktionelle polymerisierbare Verbindung und eine polyfunktionelle polymerisierbare Verbindung enthält und ein Masseninhaltsverhältnis der monofunktionellen polymerisierbaren Verbindung zu der polyfunktionellen polymerisierbaren Verbindung 0,4 bis 2,3 beträgt.

**8.** Tintenstrahltinte zur Elektronenstrahlhärtung nach einem der Ansprüche 1 bis 7, ferner umfassend ein silikonbasiertes Tensid.

**9.** Tintenstrahltinte zur Elektronenstrahlhärtung nach Anspruch 8, wobei ein Gehalt des silikonbasierten Tensids 1 Massen-% bis 5 Massen-% relativ zu der Gesamtmenge der Tintenstrahltinte zur Elektronenstrahlhärtung beträgt.

**10.** Tintenstrahltinte zur Elektronenstrahlhärtung nach einem der Ansprüche 1 bis 9, ferner umfassend ein Pigment (C).

**11.** Tintensatz, der zwei oder mehr Tintenstrahltinten zur Elektronenstrahlhärtung umfasst, wobei jede die Tintenstrahltinte zur Elektronenstrahlhärtung nach Anspruch 10 ist, wobei die zwei oder mehr Tintenstrahltinten zur Elektronenstrahlhärtung sich in Farbton des Pigments (C) unterscheiden.

**12.** Tintensatz nach Anspruch **11,** wobei jede der zwei oder mehr Tintenstrahltinten zur Elektronenstrahlhärtung ein silikonbasiertes Tensid enthält und ein Gehalt des silikonbasierten Tensids 1 Massen-% bis 5 Massen-% beträgt.

**13.** Tintensatz, umfassend:

eine weiße Tinte, die die Tintenstrahltinte zur Elektronenstrahlhärtung nach Anspruch 10 ist, die ein weißes Pigment als das Pigment (C) enthält; und
eine Farbtinte, die ein Pigment mit einem anderen Farbton als Weiß enthält,
wobei die Farbtinte keine Polymerisationsinitiatoren enthält oder einen Polymerisationsinitiator in einer Menge von 0,1 Massen-% oder weniger relativ zu einer Gesamtmenge der Farbtinte enthält.

**14.** Bildaufzeichnungsverfahren, das die Tintenstrahltinte zur Elektronenstrahlhärtung nach einem der Ansprüche 1 bis 10 verwendet, wobei das Bildaufzeichnungsverfahren umfasst:

einen Tintenauftragsschritt des Aufbringens der Tintenstrahltinte zur Elektronenstrahlhärtung auf ein Substrat; und
einen Elektronenstrahl-Bestrahlungsschritt des Bestrahlens der auf das Substrat aufgebrachten Tintenstrahltinte zur Elektronenstrahlhärtung mit einem Elektronenstrahl.

**15.** Bildaufzeichnungsverfahren nach Anspruch 14,
wobei der Tintenauftragsschritt Aufbringen der Tintenstrahltinte zur Elektronenstrahlhärtung auf das Substrat und Bestrahlen der auf das Substrat aufgebrachten Tintenstrahltinte zur Elektronenstrahlhärtung mit einer Ultraviolettstrahlung X, die eine Strahlung mit einer Wellenlänge von 300 nm bis 395 nm enthält, enthält und bei dem Elektronenstrahl-Bestrahlungsschritt die mit der Ultraviolettstrahlung X bestrahlte Tintenstrahltinte zur Elektronenstrahlhärtung mit dem Elektronenstrahl bestrahlt wird.

**16.** Bildaufzeichnungsverfahren, das den Tintensatz nach Anspruch 11 oder 12 verwendet, wobei das Bildaufzeichnungsverfahren umfasst:

einen Tintenauftragsschritt des nacheinander erfolgenden Aufbringens der zwei oder mehr Tintenstrahltinten zur Elektronenstrahlhärtung auf ein Substrat; und
einen Elektronenstrahl-Bestrahlungsschritt des Bestrahlens der auf das Substrat aufgebrachten zwei oder mehr Tintenstrahltinten zur Elektronenstrahlhärtung mit einem Elektronenstrahl.

**17.** Bildaufzeichnungsverfahren nach Anspruch 16,
wobei bei dem Tintenauftragsschritt ein Vorgang des Aufbringens einer der zwei oder mehr Tintenstrahltinten zur Elektronenstrahlhärtung auf das Substrat und des Bestrahlens der aufgebrachten einer mit einer Ultraviolettstrahlung X, die eine Strahlung mit einer Wellenlänge von 300 nm bis 395 nm enthält, für jede der zwei oder mehr Tintenstrahltinten zur Elektronenstrahlhärtung nacheinander durchgeführt wird.

**18.** Bildaufzeichnungsverfahren nach Anspruch 16 oder 17,
wobei der Tintensatz enthält:

eine weiße Tinte, die die Tintenstrahltinte zur Elektronenstrahlhärtung ist, die ein weißes Pigment als das Pigment (C) enthält, und
eine Farbtinte, die die Tintenstrahltinte zur Elektronenstrahlhärtung ist, die ein Pigment mit einem anderen Farbton als Weiß als das Pigment (C) enthält, und
bei dem Tintenauftragsschritt die weiße Tinte und die Farbtinte in dieser Reihenfolge aufgebracht werden und ein Wert, der durch Subtrahieren einer dynamischen Oberflächenspannung $\gamma$ der Farbtinte 500 $\mu$s nach Aufbringen

der Farbtinte von einer dynamischen Oberflächenspannung γ der weißen Tinte 500 μs nach Aufbringen der weißen Tinte erhalten wird, mehr als 1 mN/m beträgt,

wobei die dynamische Oberflächenspannung durch ein Maximalblasendruckverfahren in einer Umgebung von 23 °C und 55 % relativer Luftfeuchtigkeit (RH) bestimmt wird.

**19.** Bildaufzeichnungsverfahren nach einem der Ansprüche 16 bis 18,

wobei der Tintensatz eine weiße Tinte, die die Tintenstrahltinte zur Elektronenstrahlhärtung ist, die ein weißes Pigment als das Pigment (C) enthält, und zwei oder mehr Farbtinten, die jeweils die Tintenstrahltinte zur Elektronenstrahlhärtung sind, die ein Pigment mit einem anderen Farbton als Weiß als das Pigment (C) enthält, enthält,

bei dem Tintenauftragsschritt die weiße Tinte aufgebracht wird und dann die zwei oder mehr Farbtinten nacheinander aufgebracht werden und wenn n eine ganze Zahl von 2 oder größer ist, ein Absolutwert eines Werts, der durch Subtrahieren einer dynamischen Oberflächenspannung γ(n + 1) der Farbtinte, die (n + 1)-te aufgebracht wird, 500 μs nach Aufbringen der Farbtinte, die (n + 1)-te aufgebracht wird, von einer dynamischen Oberflächenspannung γ(n) der Farbtinte, die n-te aufgebracht wird, 500 μs nach Aufbringen der Farbtinte, die n-te aufgebracht wird, erhalten wird, 1 mN/m oder weniger beträgt,

wobei die dynamische Oberflächenspannung durch ein Maximalblasendruckverfahren in einer Umgebung von 23 °C und 55 % relativer Luftfeuchtigkeit (RH) bestimmt wird.

**20.** Bildaufzeichnungsverfahren, das den Tintensatz nach Anspruch 13 verwendet, wobei das Bildaufzeichnungsverfahren umfasst:
einen Tintenauftragsschritt des Aufbringens der weißen Tinte und der Farbtinte in dieser Reihenfolge auf ein Substrat und einen Elektronenstrahl-Bestrahlungsschritt des Durchführens von Elektronenstrahl-Bestrahlung nach Aufbringen der weißen Tinte auf das Substrat, Bestrahlung mit einer Ultraviolettstrahlung X, die eine Strahlung mit einer Wellenlänge von 300 nm bis 395 nm enthält, und weiterem Aufbringen der Farbtinte.

## Revendications

**1.** Encre à jet d'encre pour durcissement par faisceau d'électrons, comprenant un initiateur de polymérisation (A) et un composé polymérisable (B),

dans laquelle l'initiateur de polymérisation (A) inclut un initiateur de polymérisation de type abstraction d'hydrogène ayant un poids moléculaire de 500 ou plus, et

une teneur de l'initiateur de polymérisation (A) est supérieure à 0 % en masse et de 2 % en masse ou moins par rapport à une quantité totale de l'encre à jet d'encre pour durcissement par faisceau d'électrons,

l'encre à jet d'encre pour durcissement par faisceau d'électrons comprenant en outre une amine ayant un poids moléculaire de 500 ou plus, dans laquelle une teneur de l'amine ayant un poids moléculaire de 500 ou plus est de 0,1 % en masse à 2 % en masse par rapport à la quantité totale de l'encre à jet d'encre pour durcissement par faisceau d'électrons.

**2.** Encre à jet d'encre pour durcissement par faisceau d'électrons selon la revendication 1, dans laquelle une teneur de l'initiateur de polymérisation de type abstraction d'hydrogène ayant un poids moléculaire de 500 ou plus est de 0,1 % en masse à 2 % en masse par rapport à la quantité totale de l'encre à jet d'encre pour durcissement par faisceau d'électrons.

**3.** Encre à jet d'encre pour durcissement par faisceau d'électrons selon la revendication 1 ou la revendication 2, dans laquelle l'initiateur de polymérisation de type abstraction d'hydrogène ayant un poids moléculaire de 500 ou plus est au moins un d'un composé thioxanthone ou d'un composé benzophénone.

**4.** Encre à jet d'encre pour durcissement par faisceau d'électrons selon l'une quelconque des revendications 1 à 3, dans laquelle un initiateur de polymérisation autre que l'initiateur de polymérisation de type abstraction d'hydrogène ayant un poids moléculaire de 500 ou plus n'est pas inclus, ou une teneur de l'initiateur de polymérisation autre que l'initiateur de polymérisation de type abstraction d'hydrogène ayant un poids moléculaire de 500 ou plus est de 0,1 % en masse ou moins par rapport à la quantité totale de l'encre à jet d'encre pour durcissement par faisceau d'électrons.

**5.** Encre à jet d'encre pour durcissement par faisceau d'électrons selon l'une quelconque des revendications 1 à 4, dans

laquelle l'initiateur de polymérisation de type abstraction d'hydrogène ayant un poids moléculaire de 500 ou plus inclut un initiateur de polymérisation de type abstraction d'hydrogène ayant un poids moléculaire de 1 000 ou plus.

**6.** Encre à jet d'encre pour durcissement par faisceau d'électrons selon l'une quelconque des revendications précédentes, dans laquelle l'amine ayant un poids moléculaire de 500 ou plus inclut une amine ayant un poids moléculaire de 1 000 ou plus.

**7.** Encre à jet d'encre pour durcissement par faisceau d'électrons selon l'une quelconque des revendications 1 à 6, dans laquelle le composé polymérisable (B) inclut un composé polymérisable monofonctionnel et un composé polymérisable polyfonctionnel, et un rapport de teneur en masse du composé polymérisable monofonctionnel au composé polymérisable polyfonctionnel est de 0,4 à 2,3.

**8.** Encre à jet d'encre pour durcissement par faisceau d'électrons selon l'une quelconque des revendications 1 à 7, comprenant en outre un tensioactif à base de silicone.

**9.** Encre à jet d'encre pour durcissement par faisceau d'électrons selon la revendication 8, dans laquelle une teneur du tensioactif à base de silicone est de 1 % en masse à 5 % en masse par rapport à la quantité totale de l'encre à jet d'encre pour durcissement par faisceau d'électrons.

**10.** Encre à jet d'encre pour durcissement par faisceau d'électrons selon l'une quelconque des revendications 1 à 9, comprenant en outre un pigment (C).

**11.** Ensemble d'encres comprenant deux ou plusieurs encres à jet d'encre pour durcissement par faisceau d'électrons, chacune étant l'encre à jet d'encre pour durcissement par faisceau d'électrons selon la revendication 10, dans lequel les deux ou plusieurs encres à jet d'encre pour durcissement par faisceau d'électrons sont différentes par la teinte du pigment (C).

**12.** Ensemble d'encres selon la revendication 11, dans lequel chacune des deux ou plusieurs encres à jet d'encre pour durcissement par faisceau d'électrons contient un tensioactif à base de silicone, et une teneur du tensioactif à base de silicone est de 1 % en masse à 5 % en masse.

**13.** Ensemble d'encres comprenant :

une encre blanche qui est l'encre à jet d'encre pour durcissement par faisceau d'électrons selon la revendication 10 contenant un pigment blanc en tant que pigment (C) ; et
une encre de couleur contenant un pigment ayant une teinte autre que le blanc,
dans lequel l'encre de couleur ne contient pas d'initiateur de polymérisation ou contient un initiateur de polymérisation en une quantité de 0,1 % en masse ou moins par rapport à une quantité totale de l'encre de couleur.

**14.** Procédé d'enregistrement d'images utilisant l'encre à jet d'encre pour durcissement par faisceau d'électrons selon l'une quelconque des revendications 1 à 10, le procédé d'enregistrement d'images comprenant :

une étape d'application d'encre consistant à appliquer l'encre à jet d'encre pour durcissement par faisceau d'électrons sur un substrat ; et
une étape d'irradiation par faisceau d'électrons consistant à irradier l'encre à jet d'encre pour durcissement par faisceau d'électrons appliquée sur le substrat avec un faisceau d'électrons.

**15.** Procédé d'enregistrement d'images selon la revendication 14,
dans lequel l'étape d'application d'encre inclut l'application de l'encre à jet d'encre pour durcissement par faisceau d'électrons sur le substrat et l'irradiation de l'encre à jet d'encre pour durcissement par faisceau d'électrons appliquée sur le substrat avec un rayonnement ultraviolet X incluant un rayonnement ayant une longueur d'onde de 300 nm à 395 nm, et dans l'étape d'irradiation par faisceau d'électrons, l'encre à jet d'encre pour durcissement par faisceau d'électrons irradiée avec le rayonnement ultraviolet X est irradiée avec le faisceau d'électrons.

**16.** Procédé d'enregistrement d'images utilisant l'ensemble d'encres selon la revendication 11 ou la revendication 12, le procédé d'enregistrement d'images comprenant :

une étape d'application d'encre consistant à appliquer séquentiellement les deux ou plusieurs encres à jet d'encre pour durcissement par faisceau d'électrons sur un substrat ; et
une étape d'irradiation par faisceau d'électrons consistant à irradier les deux ou plusieurs encres à jet d'encre pour durcissement par faisceau d'électrons appliquées sur le substrat avec un faisceau d'électrons.

**17.** Procédé d'enregistrement d'images selon la revendication 16,
dans lequel dans l'étape d'application d'encre, une opération consistant à appliquer une des deux ou plusieurs encres à jet d'encre pour durcissement par faisceau d'électrons sur le substrat et à irradier l'une appliquée avec un rayonnement ultraviolet X incluant un rayonnement ayant une longueur d'onde de 300 nm à 395 nm est effectuée séquentiellement sur les deux ou plusieurs encres à jet d'encre pour durcissement par faisceau d'électrons une par une.

**18.** Procédé d'enregistrement d'images selon la revendication 16 ou la revendication 17, dans lequel l'ensemble d'encres inclut

une encre blanche qui est l'encre à jet d'encre pour durcissement par faisceau d'électrons contenant un pigment blanc en tant que pigment (C), et
une encre de couleur qui est l'encre à jet d'encre pour durcissement par faisceau d'électrons contenant un pigment ayant une teinte autre que le blanc en tant que pigment (C), et
dans l'étape d'application d'encre, l'encre blanche et l'encre de couleur sont appliquées dans cet ordre, et une valeur obtenue en soustrayant une tension superficielle dynamique $\gamma$ de l'encre de couleur à 500 $\mu$s après l'application de l'encre de couleur d'une tension superficielle dynamique $\gamma$ de l'encre blanche à 500 $\mu$s après l'application de l'encre blanche est supérieure à 1 mN/m,
dans lequel la tension superficielle dynamique est déterminée par une méthode de pression maximale de bulle dans un environnement à 23 °C et 55 % d'humidité relative (HR).

**19.** Procédé d'enregistrement d'images selon l'une quelconque des revendications 16 à 18, dans lequel l'ensemble d'encres inclut une encre blanche qui est l'encre à jet d'encre pour durcissement par faisceau d'électrons contenant un pigment blanc en tant que pigment (C), et

deux ou plusieurs encres de couleur qui sont chacune l'encre à jet d'encre pour durcissement par faisceau d'électrons contenant un pigment ayant une teinte autre que le blanc en tant que pigment (C),
dans l'étape d'application d'encre, l'encre blanche est appliquée, puis les deux ou plusieurs encres de couleur sont appliquées séquentiellement, et lorsque n est un entier de 2 ou plus, une valeur absolue d'une valeur obtenue en soustrayant une tension superficielle dynamique $\gamma(n + 1)$ de l'encre de couleur appliquée en (n + 1)-ième position à 500 $\mu$s après l'application de l'encre de couleur appliquée en (n + 1)-ième position d'une tension superficielle dynamique $\gamma(n)$ de l'encre de couleur appliquée en n-ième position à 500 $\mu$s après l'application de l'encre de couleur appliquée n-ième position est de 1 mN/m ou moins,
dans lequel la tension superficielle dynamique est déterminée par une méthode de pression maximale de bulle dans un environnement à 23 °C et 55 % d'humidité relative (HR).

**20.** Procédé d'enregistrement d'images utilisant l'ensemble d'encres selon la revendication 13, le procédé d'enregistrement d'images comprenant :
une étape d'application d'encre consistant à appliquer l'encre blanche et l'encre de couleur dans cet ordre sur un substrat, et une étape d'irradiation par faisceau d'électrons consistant à effectuer une irradiation par faisceau d'électrons après l'application de l'encre blanche sur le substrat, une irradiation par un rayonnement ultraviolet X incluant un rayonnement ayant une longueur d'onde de 300 nm à 395 nm, et une application supplémentaire de l'encre de couleur.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018086726 A
- EP 2770030 A1
- WO 2017180496 A1
- JP 2014162828 A
- JP 2011068783 A
- JP 2015160890 A


### Non-patent literature cited in the description


- *CHEMICAL ABSTRACTS*, 1003567-83-6
- *CHEMICAL ABSTRACTS*, 813452-37-8
- *CHEMICAL ABSTRACTS*, 515136-48-8